# EUROPÄISCHE PATENTSCHRIFT

(11) **EP 0 891 447 B1**
(45) Veröffentlichungstag und Bekanntmachung des Hinweises auf die Patenterteilung: **19.03.2003**
(21) Anmeldenummer: 97919325.7
(22) Anmeldetag: 09.04.1997
(51) Int. Cl.: E01C 11/22, E01C 5/00

(54) **BETONFORMSTEIN, FÜR INSBESONDERE EINE PFLASTERUNG IM BEREICH EINER TANKSTELLE ODER DGL.**
CONCRETE BLOCK, IN PARTICULAR FOR PAVING A PETROL STATION OR THE LIKE
PIERRE MOULEE EN BETON, NOTAMMENT POUR LE DALLAGE D'UNE STATION-SERVICE OU SIMILAIRE

(30) Priorität: 11.04.1996 DE 29606557 U; 19.12.1996 DE 29622083 U
(43) Veröffentlichungstag der Anmeldung: 20.01.1999
(73) Patentinhaber: Kortmann, Karl, 48465 Schüttorf (DE)
(72) Erfinder: Kortmann, Karl, 48465 Schüttorf (DE)
(74) Vertreter: Busse & Busse Patentanwälte
(86) Internationale Anmeldenummer: EP9701760
(87) Internationale Veröffentlichungsnummer: WO97038168

(56) Entgegenhaltungen:
- DE-A- 2 414 674
- DE-U- 9 106 183
- FR-A- 2 385 846
- FR-A- 2 481 723
- FR-A- 2 713 254
- US-A- 775 791
- HIGHWAYS, Bd. 57, Nr. 1947, März 1989, Seite 23 XP000046078 "Block curb crossover for easy access"

## Beschreibung

Die Erfindung betrifft einen Betonformstein für insbesondere eine Pflasterung in einer Verbundverlegung im Bereich einer Tankstelle oder dgl. gemäß dem Oberbegriff des Anspruches 1.

Bekannte Formsteine dieser Art (US-A- 775,791) sind als eine Rampenprofilierung aufweisende Rinnensteine ausgebildet, deren Nutzoberfläche ausgehend von einem oberen Flächenbereich über einen mittleren Schrägungsbereich in einen unteren Flächenbereich in Form einer Flüssigkeitsleitrinne übergeht, so daß diese in der Einbaulage des Rinnensteines eine aus angrenzenden Flächen, z.B. einer angrenzenden Fahrbahn, Pflasterfläche oder dgl., eintretene Oberflächenflüssigkeit aufnimmt. Derartige Rinnenformsteine sind nur für eine im wesentlichen fahrbahnparallele Einbaulage vorgesehen und werden beispielsweise an Straßenrändern oder dgl. verlegt. Dabei bilden die Formsteine im oberen Flächenbereich mit dem Rampenprofil bei quer zur Verlegerichtung erfolgenden Belastungen ein Hindernis, so daß diese Steine zu ungewollten Ausbrüchen neigen und damit die Flüssigkeitsleitrinne für flüssigkeitsdichte Systeme nicht geeignet ist. Außerdem sind punktuelle An- und Auflagebereiche an derartigen Rinnensteinen wirksam, so daß der Stein durch Kippmomente aus seiner Einbaulage verschoben werden kann und die Langzeitstabilität und die Fugendichtigkeit auch zu nebenliegenden Nutzoberflächen hin nachteilig beeinflußt sind. Gemäß FR-A-2 713 254 ist ein rohrförmiger Sammelbehälter vorgesehen, der oberseitig eine zu einem Einlaufkasten hin verlaufende V-förmige Flüssigkeitsleitrinne aufweist. Die Rohrteile werden stirnseitig über eine ineinandergreifende Stützprofilierung so verbunden, daß die oberseitigen Rinnen aneinandergrenzen.

Der Erfindung liegt die Aufgabe zugrunde, einen Betonformstein zu schaffen, dessen Rampenprofilform bei einem verbesserten Schutz der Seitenkantenbereiche gegen Überbelastungen eine weitgehend kippmomentfreie Aufnahme von Oberflächenkräften ermöglicht, bei dessen Verlegung im Pflasterverbund eine zuverlässige Dichtigkeit gegen Versickerungen im Bereich der mit einem Dichtmittel verfüllten Trennfugen erreichbar ist und der mit einer eine zuverlässige Flächenentwässerung bewirkenden Flüssigkeitsleitrinne versehen ist.

Die Erfindung löst diese Aufgabe mit einem Betonpflasterstein mit den Merkmalen des Anspruches 1. Hinsichtlich wesentlicher weiterer Ausgestaltungen wird auf die Ansprüche 2 bis 27 verwiesen.

Der erfindungsgemäß ausgebildete Betonformstein weist im Bereich seines Rampenprofils mit den jeweilige Erhebungen bildenden Scheitelflächenbereichen und den an diese anschließenden Profilradien eine in der Einbaulage als Rollprofilierung für Fahrzeuge wirksame Nutzfläche auf. Diese Rollprofilierung ist mit jeweiligen als Kantenschutz wirksamen Oberflächenabsenkungen im oberen Bereich der Seitenflächen des Steins derart kombiniert, daß der Betonformstein in der Verlegestellung belastungsoptimal positionierte Randbereiche darbietet und die Nutzfläche in beliebigen Rollrichtungen mit Fahrzeugen überfahrbar ist.

In einer Ausbildung als Doppelrampenstein weist der Betonformstein einen oberen Scheitelflächenbereich auf, von dem ausgehend symmetrisch zur Mittellängsebene die Rollprofilierung bis zu den randseitigen Oberflächenabsenkungen hin verläuft, so daß der Stein mit diesen in die Nutzfläche integrierten Radienformen insgesamt im Bereich seiner Oberfläche keinerlei scharfkantige Übergangszonen darbietet und auch horizontal wirksame Schubkräfte, beispielsweise von Kehrmaschinen, Schneepflügen, Bremsbelastungen oder dgl., mit geringem Widerstand bzw. über große Stützflächenbereiche so verteilt aufnehmen kann, daß bei stoßfreier Überrollbarkeit Beschädigungen des Steins vermieden sind.

In einer Ausbildung als Rinnenformstein bildet dieser zwischen benachbarten unteren Flächenabsenkungen eine zentrale Flüssigkeitsleitrinne, wobei in dieser zusätzlich eine nutförmige und längsgerichtete Sammelrinne so geformt sein kann, daß auch bei geringen Lageabweichungen der in Einbaulage aneinandergereihten Rinnenformsteine eine in diese eintretende Flüssigkeit in der Sammelrinne so geleitet wird, daß ein Flüssigkeitsstau vermieden ist und damit eine ungewollte Verteilung von Oberflächenwasser oder dgl. Flüssigkeiten, beispielsweise durch den Rinnenformstein in Längs- oder Querrichtung überrollende Fahrzeuge, vermieden ist. Die Flüssigkeitsleitrinnen mit den integrierten Sammelrinnen sind dabei vorteilhaft in Verlegestellung der aneinandergereihten Steine so angeordnet, daß insbesondere im Bereich von Tankstellendurchfahrten oder dgl., gegen ungewollte Versickerungen zu schutzehde - Verkehrsflächen, auch geringe Mengen von Oberflächenwasser und anderen Verunreinigungen auf einem vorteilhaft kurzen und durch die Sammelrinne schnell wirksamen Fließweg zu einem Abflußteil geführt und hier ohne Bodenverunreinigung entsorgt werden können. Die umgebende Pflasterfläche ist ohne Restflüssigkeitsstellen schnell entwässert, so daß eine auch unter rauhen Betriebsbedingungen gefährdungsfrei benutzbare Fahrfläche gebildet ist, die auch im Bereich der Rinnenformsteine in beliebiger Richtung längs und quer überfahrbar ist.

Weitere Einzelheiten und Vorteile der Erfindung ergeben sich aus der nachfolgenden Beschreibung und den Zeichnungen, die mehrere Ausführungsbeispiele des erfindungsgemäßen Betonformsteins veranschaulichen. In der Zeichnung zeigt:
- Fig. 1: eine Prinzipdarstellung einer flüssigkeitsdichten Pflasterung mit einer Randeinfassung bei Verlegung im Bereich einer Tankstelle,
- Fig. 2: eine Prinzipdarstellung der Pflasterung im Bereich der Randeinfassung gemäß einer Linie II - II in Fig. 1,
- Fig. 3: eine Prinzipdarstellung ähnlich Fig. 2 gemäß einer Linie III - III in Fig. 1,
- Fig. 4: eine perspektivische Ausschnittsdarstellung in einem Eckbereich der Pflasterung gemäß Fig. 1 in Pfeilrichtung IV,
- Fig. 5: eine vergrößerte Schnittdarstellung eines eine Randeinfassung bildenden Betonformsteines in erfindungsgemäßer Ausbildung gemäß einer Linie V - V in Fig. 4,
- Fig. 6 bis Fig. 9: jeweilige Ausschnittsdarstellungen des Betonformsteins gemäß Fig. 5 in einer Ausführungsform mit einem Einlaufkasten gemäß einer Linie VI - VI in Fig. 4,
- Fig. 10: eine Draufsicht auf den mit dem Einlaufkasten ausgebildeten Betonformstein mit mehreren als Einlaufnut ausgebildeten Flüssigkeitsleitrinnen,
- Fig. 11: eine Draufsicht auf ein Betonelement ähnlich Fig. 10 in einer von Ortbeton umgebenen Einbaulage in einer Fahrfläche,
- Fig. 12 bis Fig. 14: jeweilige Prinzipdarstellungen des Betonformsteins gemäß einer Seitenansicht in einer Pfeilrichtung XIII in Fig. 4,
- Fig. 15: eine Prinzipdarstellung einer flüssigkeitsdichten Pflasterung mit mehreren doppelrampenförmigen Rinnenformsteinen,
- Fig. 16 und Fig. 17: jeweilige perspektivische Einzeldarstellungen eines der Rinnenformsteine mit unterschiedlichen Abmessungen,
- Fig. 18: eine Draufsicht auf den Rinnenformstein gemäß Fig. 15,
- Fig. 19: eine Seitenansicht des Rinnenformsteins gemäß Fig. 18,
- Fig. 20: eine vergrößerte Ausschnittsdarstellung des Rinnenformsteins gemäß Fig. 18 in einem Eckbereich,
- Fig. 21: eine Schnittdarstellung gemäß einer Linie VII - VII in Fig. 20,
- Fig. 22: eine vergrößerte Ausschnittsdarstellung des Rinnenformsteins gemäß Fig. 19,
- Fig. 23 bis Fig. 28: jeweilige Draufsichten von unterschiedliche Umfangskontur aufweisenden Rinnenformsteinen,
- Fig. 29 bis Fig. 32: jeweilige Verlegebeispiele der als ein Bausatz vorgesehenen Rinnenformsteine,
- Fig. 33: eine perspektivische Ansicht des Rinnenformsteins in einer Ausführungsform mit einem Einlaufkasten,
- Fig. 34: eine Draufsicht auf ein Verlegebeispiel mit 7 Betonformsteinen in einer Fahrfläche,
- Fig. 35: eine perspektivische Einzeldarstellung eines als Doppelrampenstein ausgebildeten Betonformsteins als Teil des Bausatzes,
- Fig. 36 und Fig. 37: jeweilige Perspektivdarstellungen des Rampensteins mit einem zusätzlichen Horizontalflächenbereich in seiner Nutzoberfläche,
- Fig. 38 bis Fig. 40: jeweilige perspektivische Einzeldarstellungen von Rampensteinen des Bausatzes mit unterschiedlichen Profilierungen als Ergänzungsform,
- Fig. 41 bis Fig. 44: jeweilige Seitenansichten der Rampensteine ähnlich Fig. 19 bzw. Fig. 22 mit veränderter Rollprofilierung im Bereich der Flüssigkeitsleitrinne, und
- Fig. 45 bis Fig. 47: jeweilige Seitenansichten des Rampensteins ähnlich Fig. 12 bis 14 in Einbaulage.

Bei sämtlichen der nachfolgenden Ausführungsbeispielen und Abbildungen sind die gleichen Bezugszeichen für gleiche bzw. übereinstimmende Teile verwendet worden, ohne diese in jedem Falle erneut im einzelnen zu beschreiben.

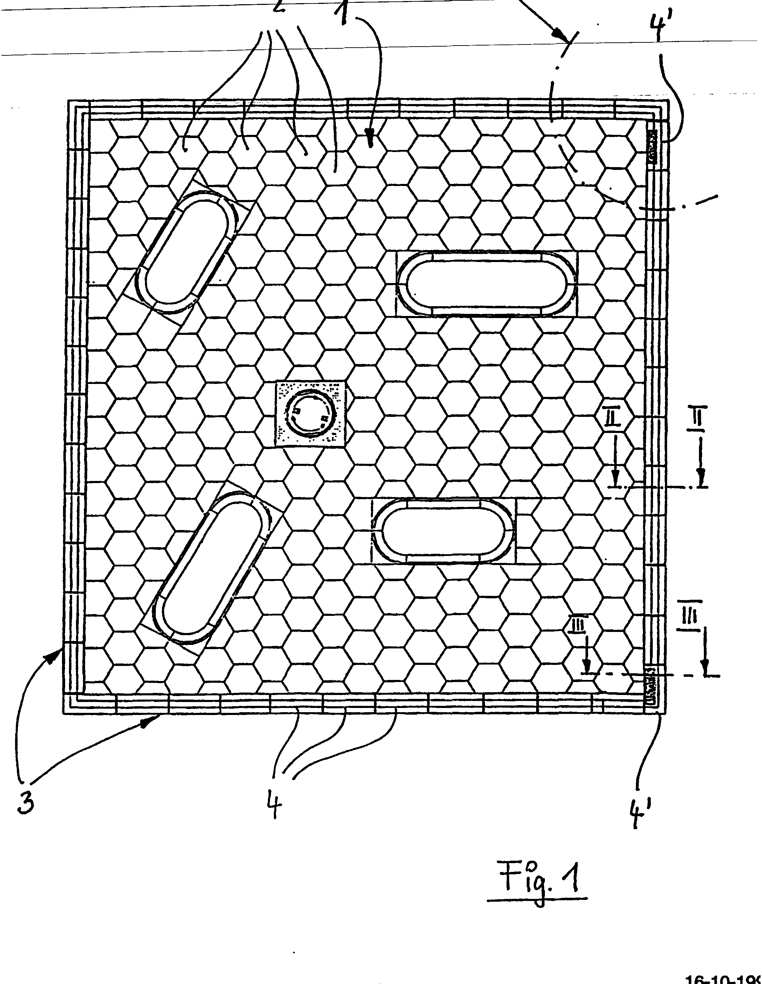

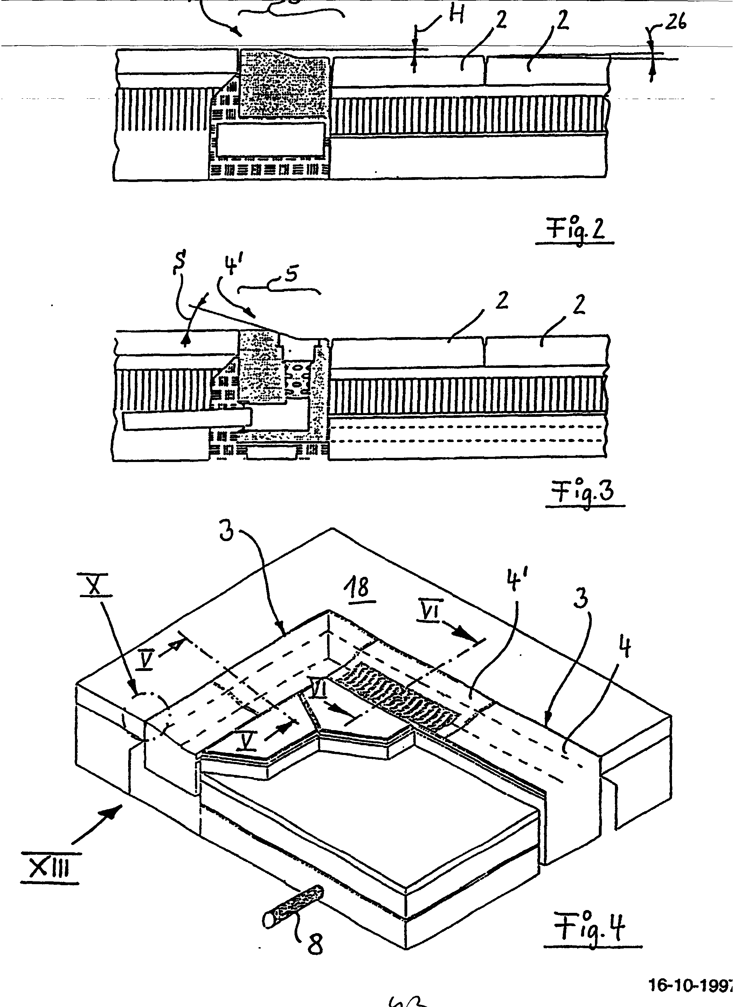

In Fig. 1 ist in einer Draufsicht eine insgesamt mit 1 bezeichnete Pflasterung mit Sechsecksteinen 2 veranschaulicht, wobei die Pflasterung 1 an ihrem Außenumfang mit einer Randeinfassung 3 versehen ist. Diese Randeinfassung 3 ist im wesentlichen von quaderförmigen Betonformsteinen 4 (Fig. 2 bis 4) gebildet, die nach Art eines Rampensteines mit einer konturierten Nutzoberfläche 5 versehen sind, die ihrerseits zu den Sechsecksteinen 2 hin in der dargestellten Verlegestellung einen Höhenunterschied H (Fig. 2) bildet. Dabei ist der Bereich der Pflasterung 1 (Fig. 1) insgesamt umlaufend mit den Rampenprofil-Steinen eingefaßt und ein Austritt von Oberflächenflüssigkeit aus dem Bereich der Pflasterung 1 verhindert. In zweckmäßiger Ausführung sind in den Eckbereichen der Randeinfassung jeweilige Betonformsteine 4' vorgesehen, die mit einem Einlaufkasten 7 (Fig. 3) versehen sind und damit eine kontrollierte Ableitung der Oberflächenflüssigkeit in eine Kanalisation 8 ermöglichen.

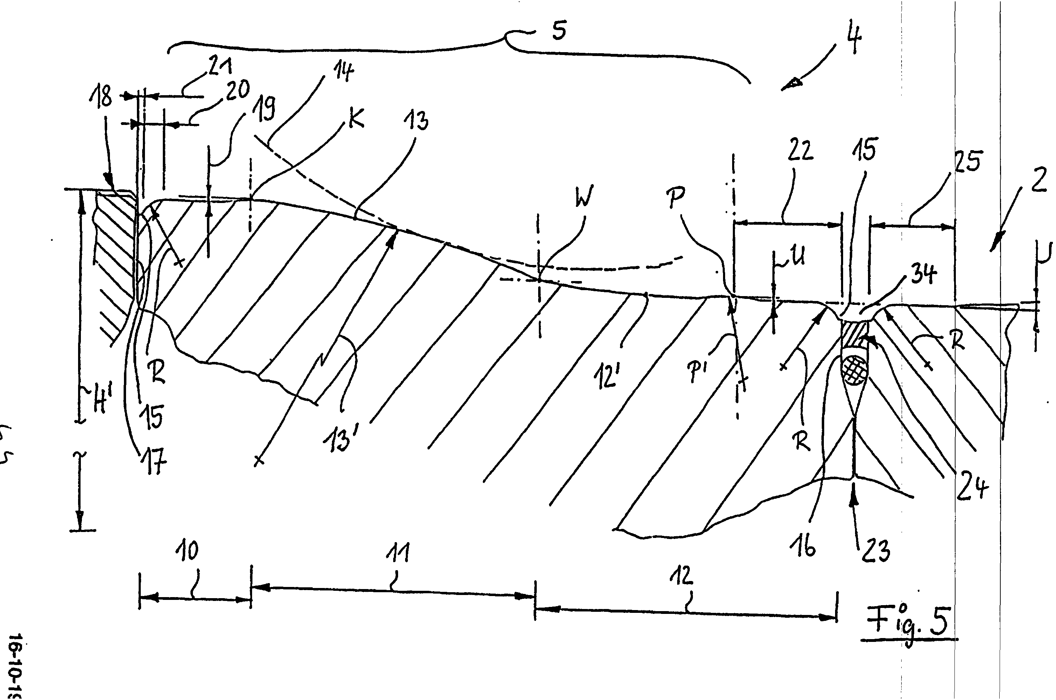

Das Rampenprofil der Nutzoberfläche 5 weist in an sich bekannter Formgebung einen oberen Flächenbereich 10, einen mittleren Flächenbereich 11 mit einer die Rampe bildenden Formschräge S und einen unteren Flächenbereich 12 auf (Fig. 5).

Der Betonformstein 4 ist in seiner erfindungsgemäßen Gestaltung (Fig. 5) mit einer Querschnittskontur versehen, die im Bereich der oberen Fläche 10 und der unteren Fläche 12 zu den Seitenflächen 16 und 17 hin jeweils als ein Kantenschutz geformt ist, derart, daß über einen im Querschnitt unterschiedlich konturierte Bereiche aufweisenden Absenkteil der Nutzoberfläche eine belastungsgeschützte Übergangszone zu den angrenzenden Teilen der Fahrfläche geschaffen ist.

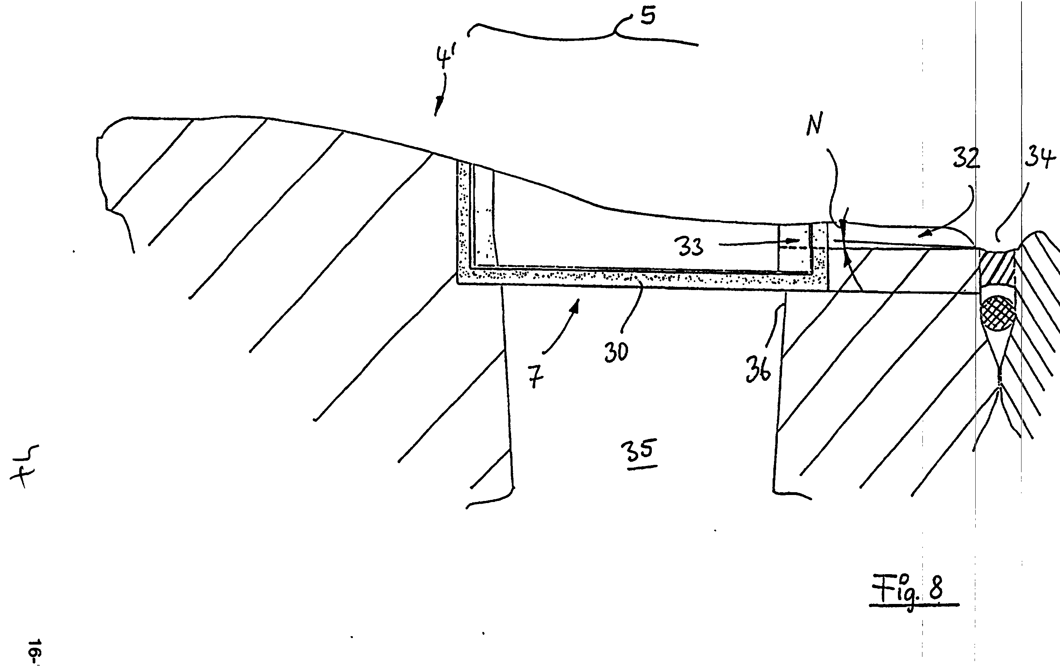

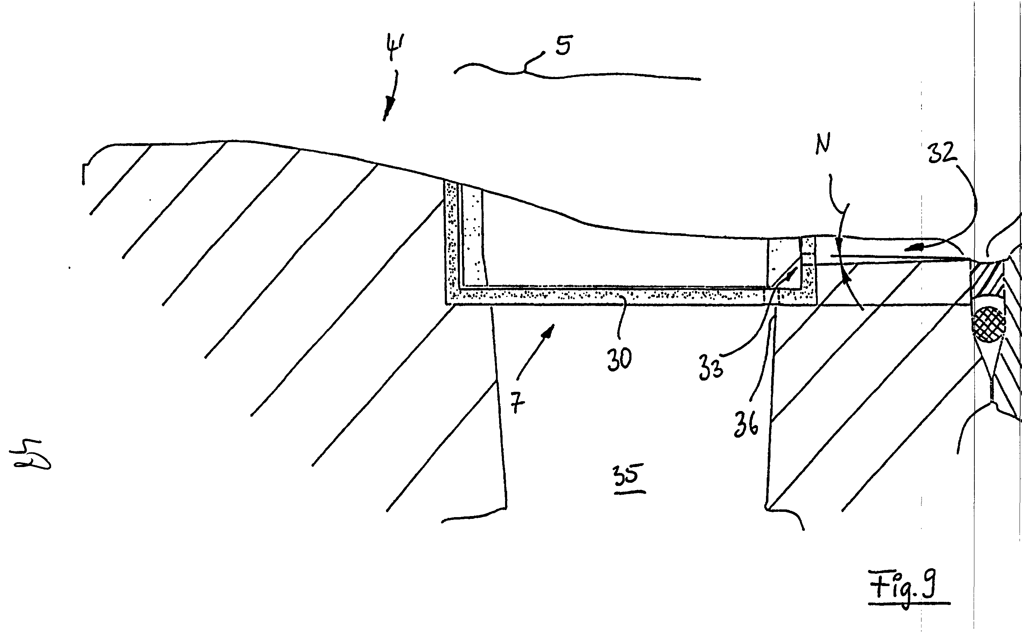

Dabei ist der erfindungsgemäße Betonformstein (Fig. 5 bis 9) außerdem in seinem mittleren Flächenbereich 11 mit einer im wesentlichen der Formschräge S folgenden und im Querschnitt konvexen Bogenkontur 13 mit einem Formradius 13' ausgebildet, der einenends zum oberen Flächenbereich 10 hin einen oberen Konturscheitelpunkt K bildet. Die Radienbogenkontur 13 weist anderenends im Übergangsbereich zum unteren Flächenbereich 12 hin einen Konturwendepunkt W auf, von dem aus die Profilform über einen konkaven Flächenbereich 12' in einen konvex aus dem unteren Flächenbereich 12 hervortretenden Profilformbereich P mit einem Radius P' und einer Höhe U übergeht. Mit dieser Profilformung bildet dieser Bereich der Nutzfläche 5 mit der Fläche 12' eine Flüssigkeitsrinne aus, die sich parallel zu den beiden Seitenflächen 16, 17 auf der Nutzfläche 5 erstreckt.

Mit dieser Querschnittsgestaltung ist außerdem auf dem Betonformstein 4, 4' eine überaus wirkungsvoll Rollprofilierung geschaffen, mit der ein optimaler Abrollvorgang für ein prinzipiell durch eine Strichlinie veranschaulichtes Fahrzeugrad 14 derart erreicht ist, daß Druckkräfte mit Abstand zur Trennfuge in den mittleren Teil des Steins eingeleitet werden, dessen Kippbelastung minimiert ist und durch die Bogenkontur der Nutzfläche 5 eine schwingungsfreie Fahrzeugbewegung ohne Belastungsstöße beim Überfahren der Pflasterung 1 möglich ist.

Die Einbaulage des Betonformsteins 4 gemäß Fig. 5 verdeutlicht, daß der obere Flächenbereich 10 und der untere Flächenbereich 12 jeweils über einen Radienbogen R und einen an diesen anschließenden Stegbereich 15 in die jeweilige Seitenfläche 16, 17 des Steines 4 übergeht. Der obere Flächenbereich 10 ist dabei im Nahbereich zu einer Fahrfläche 18 angeordnet, wobei der Konturscheitelpunkt K der Radienbogenkontur 13 unterhalb der Fahrflächenebene 18 mit einem Abstandsmaß 19 verläuft, so daß mit diese konstruktiven Ausbildung im Radienbereich 20 bzw. einer Breite 21 des Stegbereiches zwischen den jeweiligen Betonformsteinen 4 und der Fahrfläche 18 eine insgesamt weitgehend geschützte Randzone gebildet ist.

Im Bereich der unteren Fahrfläche 12 ist der Profilformbereich P mit einem Abstand 22 zur inneren Seitenfläche 16 des Steines 4 so angeordnet, daß für das abrollende Rad 14 ein definierter Krafteinleitungsbereich im Bereich der Profilform P gebildet ist und damit der bruchgefährdete Bereich nahe der Trennfuge 23 so geschützt ist, daß Abplatzungen des Betonmaterials und Beschädigungen der innerhalb der Trennfuge 23 angeordneten Dichtung 24 mit hinreichender Sicherheit vermieden sind.

Die vorbeschriebene Rollprofilierung des Betonformsteins 4 ermöglicht damit insgesamt einen kippmomentfreien Übergang des Rades 14 aus dem Bereich der eine Einbauhöhe H' aufweisenden Fahrfläche 18 bis in den Bereich des Sechseck-steines 2, auf dem nach einem Übergangsbereich 25 das Rad 14 auf einer Formschräge 26 aufrollen kann.

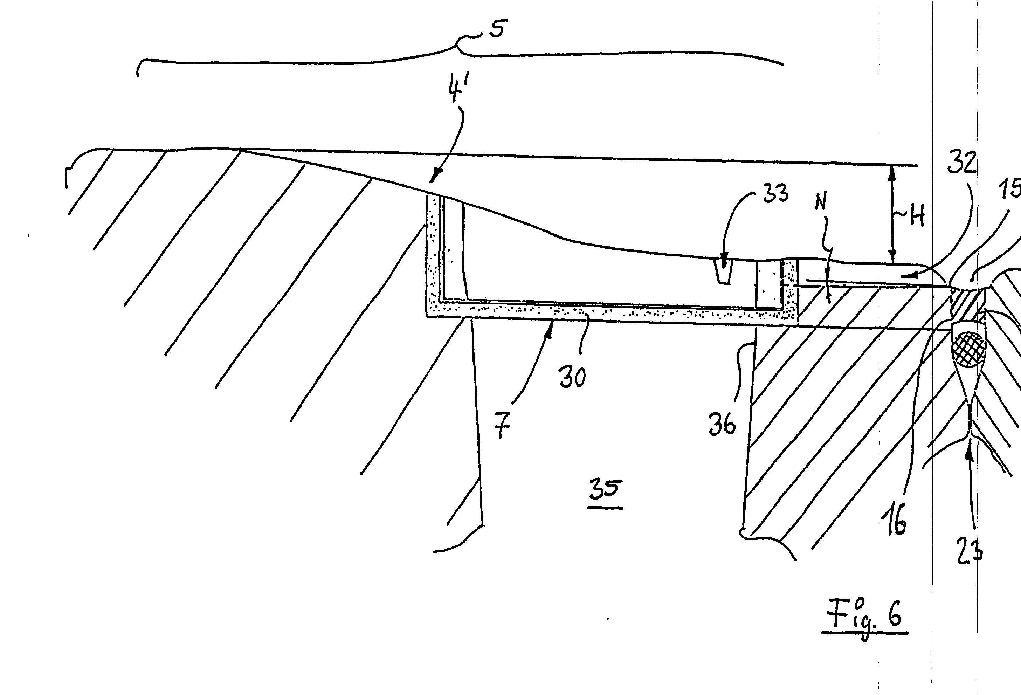

In Fig. 6 bis 9 ist. der Betonformstein 4' in einer zweiten Ausführungsform dargestellt, wobei in diesen Stein der insgesamt mit 7 bezeichneter Einlaufkasten mit einer Kastenform 30 integriert ist, deren Kontur oberseitig weitgehend der vorbeschriebenen Rollprofilierung des Betonformsteines 4' angepaßt ist. In vorteilhafter Ausbildung ist in die Oberflächenkontur 5 des Betonformsteines 4' die als eine jeweilige Einlaufnut 32, 33 ausgebildete Flüssigkeitsrinne eingeformt, wobei sich die Einlaufnut 33 senkrecht zur Zeichnungsebene erstreckt, die Einlaufnut 32 ausgehend vom Bereich des Steges 15 am Seitenrand 16 bis zu der jeweiligen Einlaufkastenform 30 verläuft und hier in die Durchlaßöffnung 35 am oberen Seitenrandbereich 36 mündet.

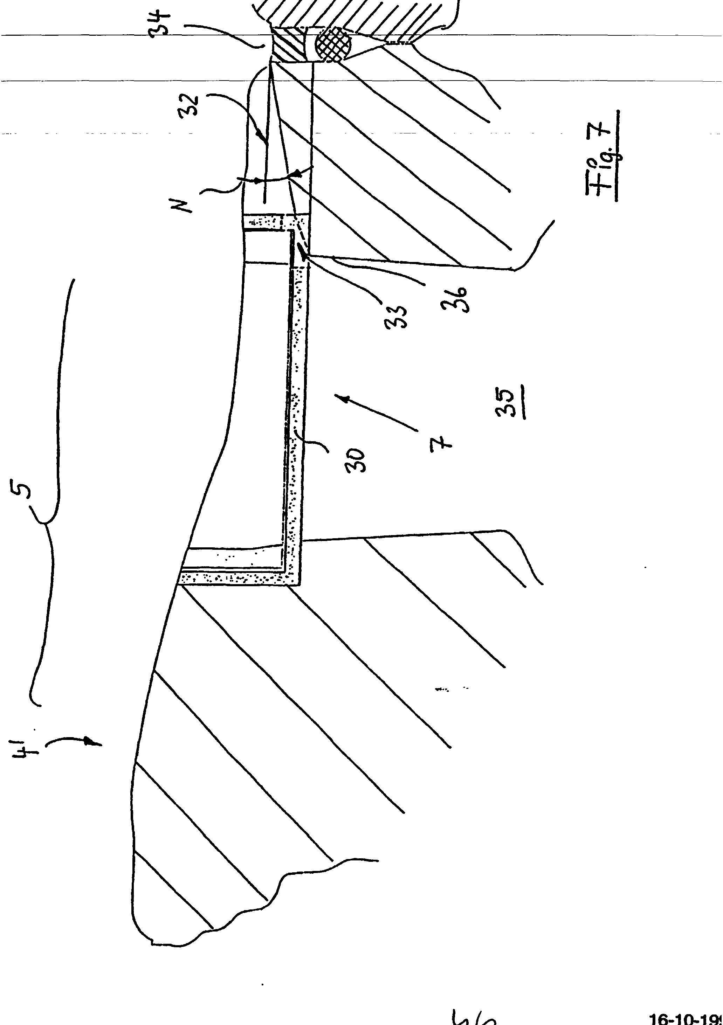

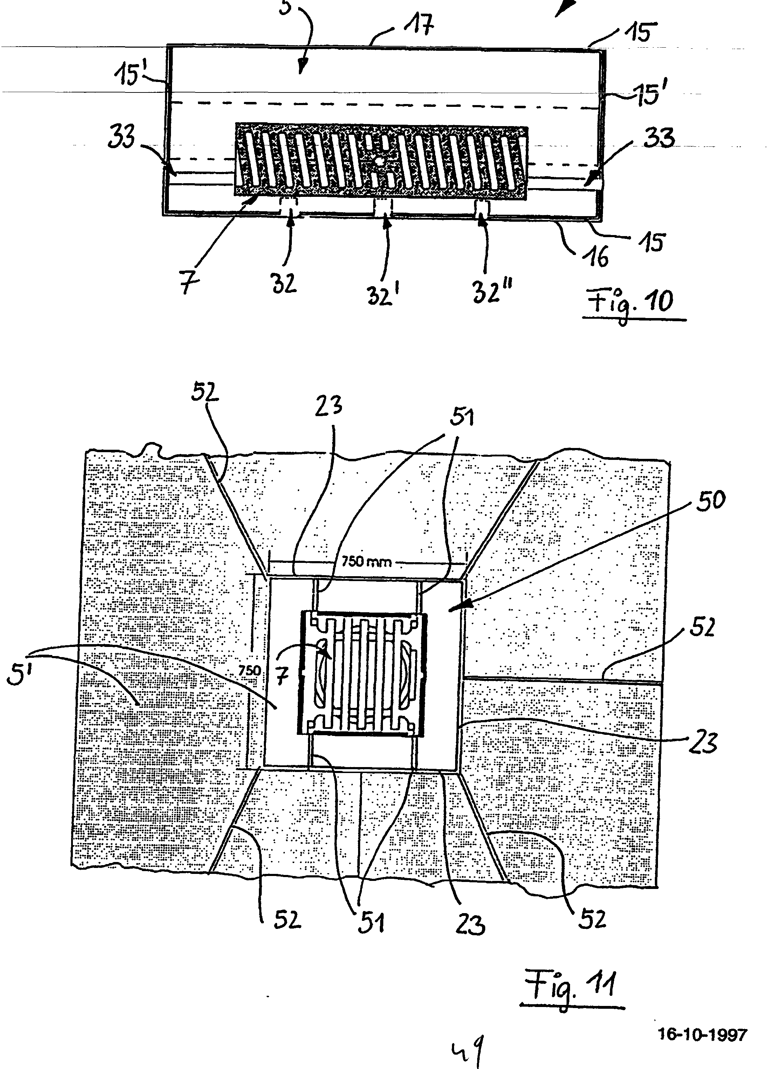

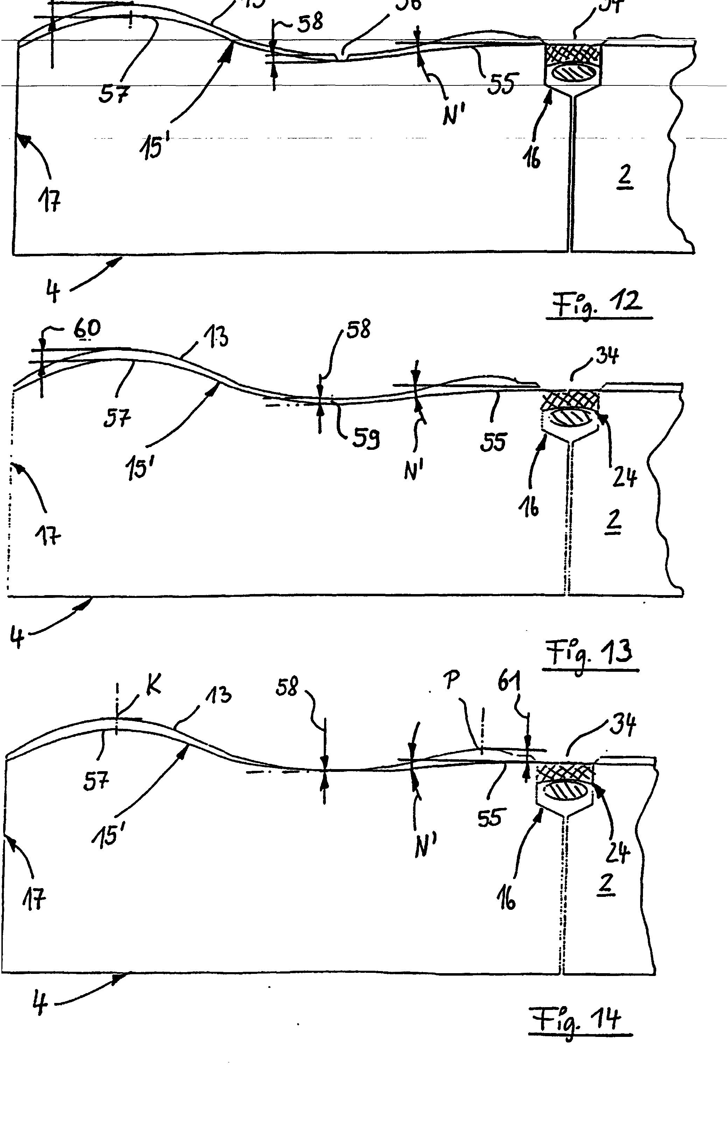

Mit dieser einfachen konstruktiven Maßnahme kann die in einem Rinnenbereich 34 der abgedichteten Trennfuge 23 befindliche Flüssigkeit, beispielsweise Oberflächenwasser, Diesel, Benzin oder dgl. so geführt werden, daß ein Übertritt auf die Nutzoberfläche 5 der Betonformsteine 4, 4' bzw. die Sechsecksteine 2 vermieden und eine permanente Ableitung der Flüssigkeit in den Einlaufkasten 30 erreicht ist. In Fig. 7 bis 9 sind weitere Ausführungsformen der Einlaufnuten 32 und 33 verdeutlicht, mit denen insbesondere im Bereich von Tankstellen-Pflasterungen (Fig. 1) eine Einleitung von Leckflüssigkeiten, insbesondere Diesel, in einen Sammelbehälter und/oder Abscheider 37 erreicht ist (Fig. 10, Fig. 11).

- In Fig. 10 ist der Betonformstein 4' in einer Draufsicht veranschaulicht, wobei dessen Nutzoberfläche 5 mit drei in Richtung der Rollprofilierung verlaufenden und als Flüssigkeitsleitrinnen wirksamen Einlaufnuten 32, 32', 32'' versehen ist. Außerdem sind quer zur Rampenprofilierung des Betonformsteines 4' zwei zur Durchgangsöffnung 35 gerichtete Einlaufnuten 33 als Flüssigkeitsrinne vorgesehen.

Die Darstellung gemäß Fig. 11 verdeutlicht ein als Betonformstein mit Einlaufkasten ausgebildetes Betonelement 50, dessen umlaufende, mit der Dichtung 24 verschlossene Trennfuge 23 in jeweils die Flüssigkeitsrinne bildende Nutbereiche 51 derart einmündet, daß über vergossene Fugen 52 geleitete Flüssigkeiten auf kurzem Wege und ohne weitere Verteilung auf der Nutzoberfläche 5' des Betonformelementes 50 in den Einlaufschacht 7 gelangen können und damit die Nutzfläche 5' jederzeit einen belagfreien Trocknungszustand aufweist.

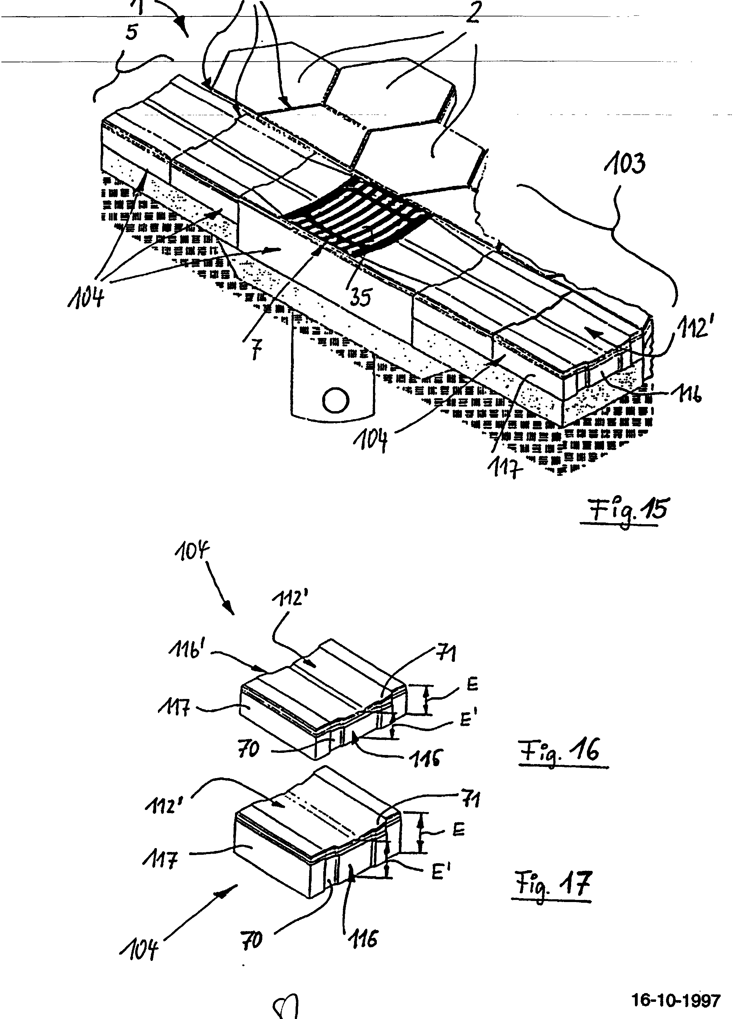

In Fig. 12 bis Fig. 14 sind jeweilige Betonformsteine 4 in der Verlegestellung verdeutlicht, wobei diese Steine jeweils mit Stegbereichen 15' versehen sind, deren Kontur der jeweiligen Rollprofilierung 13 im Bereich der Nutzfläche 5 so angepaßt ist, daß für die vorbeschriebene Flüssigkeitsableitung aus der Pflasterung 1 optimal kurze Kanalsysteme zum jeweiligen Einlaufschacht hin gebildet werden können. In der Ausführungsform gemäß Fig. 12 ist der Steg 15 mit einem Neigungsbereich 55 versehen, der ausgehend vom Dichtrinnenbereich 34 zu einer im mittleren Muldenbereich der Rollprofilierung vorgesehenen Nutform 56 führt und in diese mündet andererseits ein Neigungs- bzw. Bogenkonturbereich 57 des Stegbereiches 15' nahe der Seitenfläche 17. Damit ist für den gesamten Steg 15' eine in Verlegestellung wirksame Kontur vorgegeben, die eine optimale Flüssigkeitsleitung ohne nachteilige Sammel- und Stauräume ermöglicht. Ebenso ist denkbar, im Muldenbereich der Rollprofilierung 13 (Fig. 13) einen gewollten Stauraum mit dem jeweiligen Bereich des Steges 15' zu bilden.

In den Darstellungen gemäß Fig. 13 und 14 sind die Stegbereiche 15' mit unterschiedlichen Steghöhen 58, insbesondere im Bereich der Flüssigkeitsleitrinne der Rollprofilierung veranschaulicht. Mit dieser verlegespezifisch formbaren Steghöhe 58 kann bei Aneinanderreihung derartiger Betonformsteine 4 in einer senkrecht zur Darstellungsebene verlaufenden Einbaulage die Flüssigkeitsrinne so ausgerichtet werden, daß zusätzlich zum jeweiligen Dichtungsrinnenbereich 34 auf kürzestem Wege eine Flüssigkeitsleitung möglich ist und damit beispielsweise im Bereich einer Tankstelle beim Füllvorgang austretende Dieselkraftstoffe mit geringster Verweildauer von der Nutzfläche 5 abgeleitet, dem Einlaufkasten zugeführt und damit nachteilige Durchdringung der Betonoberflächenstuktur vermieden werden.

Die Steghöhen 58 bzw. 60 und 61 (Fig. 12 bis 14) des Steges 15' als umlaufender Formbereich des Betonformsteins 4 können mit unterschiedlichem Abstand zur Nutzoberfläche 5 bemessen werden, so daß in Bereichen hoher Belastung (z.B. Punkt K, P) der Fugenbereich besonders geschützt ist. Der Betonformstein 4, 4' kann in seiner Einbaulage zusätzlich über eine Schraub- und/oder Dübelverbindung festgelegt sein, wobei diese unterhalb des Bereiches der Fahrfläche 18 und/oder zu der beispielsweise von Sechsecksteinen 2 gebildeten Anschlußfläche hin vorgesehen ist. Mit diesen von Stützteilen (nicht dargestellt) gebildeten Verbindungen ist eine die Fugendichtigkeit beeinflussende Bewegung der Betonformsteine vermieden und die Sicherheit der gesamten Pflasterung langzeitstabil gewährleistet.

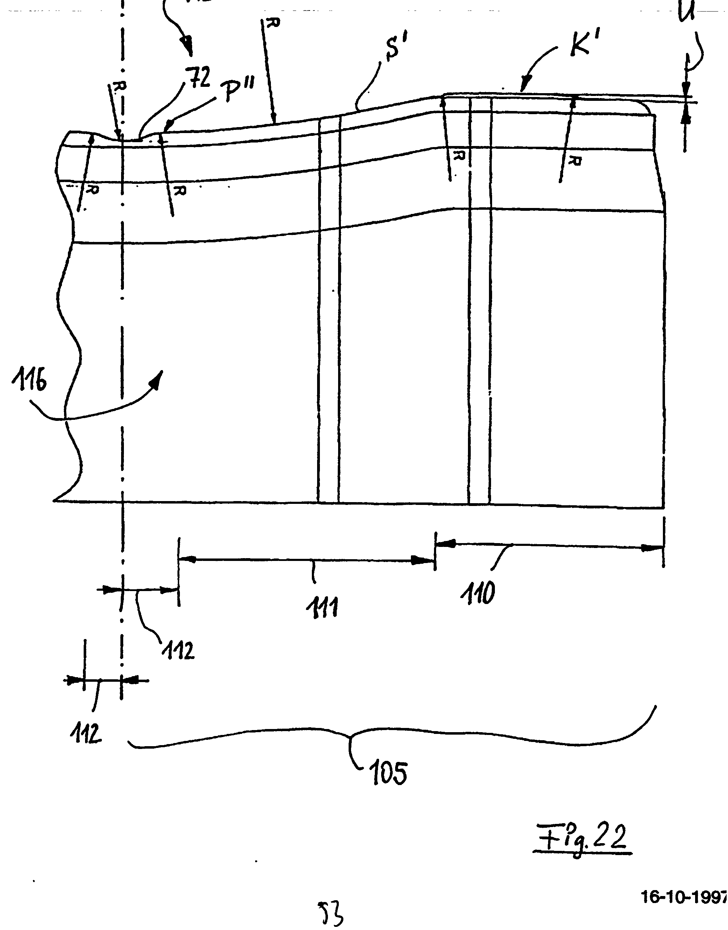

In Fig. 15 ist in einer Draufsicht eine insgesamt mit 1 bezeichnete Pflasterung mit Sechsecksteinen 2 veranschaulicht, wobei die Pflasterung mit einer eine Abstufung bildenden Randeinfassung 103 versehen ist. Diese Abstufung 103 weist mehrere aneinandergereihte, im wesentlichen quaderförmige Betonformsteine 104 auf, die nach Art eines doppelrampenförmigen Rinnenformsteins mit einer eine Muldenkontur bildenden Oberfläche 5 (Fig. 1) mit zwei Teilflächen 105, 105' (Fig. 19) versehen sind.

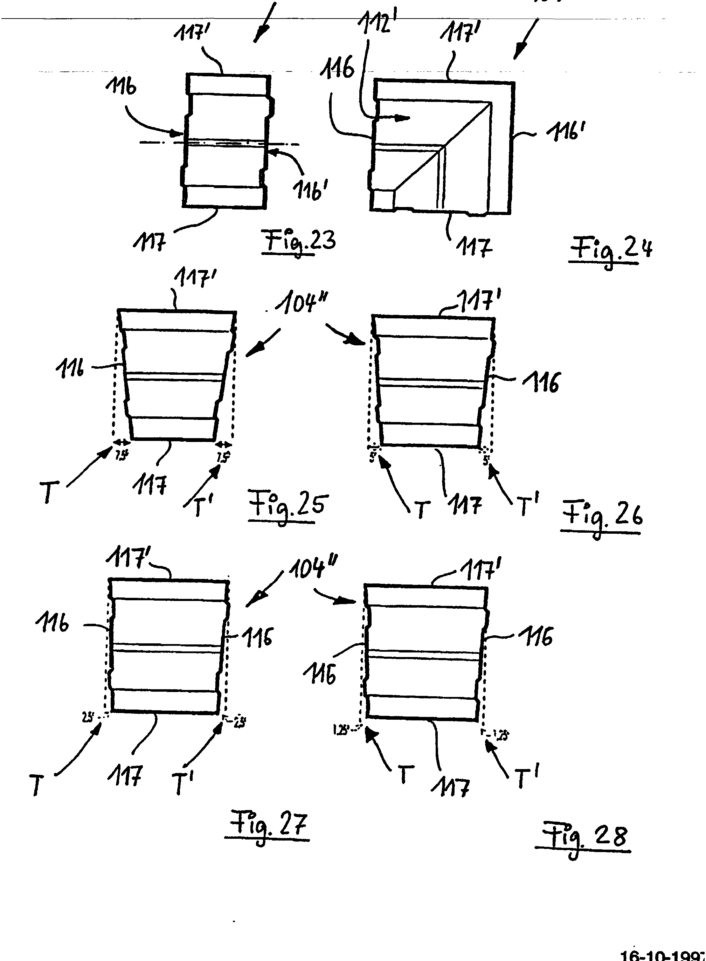

Die Einzeldarstellungen des Rinnenformsteins 104 gemäß Fig. 18 und 19 verdeutlichen, daß dieser eine zu einer vertikalen Mittelebene M symmetrische Ausbildung hat und eine zentrale Flüssigkeitsleitrinne 112' bildet, die sich entlang der vertikalen Mittelebene M zwischen benachbarten unteren Oberflächenabsenkungen 112 (Fig. 22) der beiden benachbarten rampenförmigen Teil-Nutzoberflächen 105, 105' erstreckt. Im jeweiligen oberen Flächenbereich 110 sind die von einer Erhebung gebildeten Scheitelflächenbereiche K, K' und die randseitig umlaufende Oberflächenabsenkung 19 sichtbar (Fig. 20 bis Fig. 22). Ebenso ist denkbar, die Flüssigkeitsleitrinne 112' in einer asymmetrischen Ausbildung vorzusehen (nicht dargestellt).

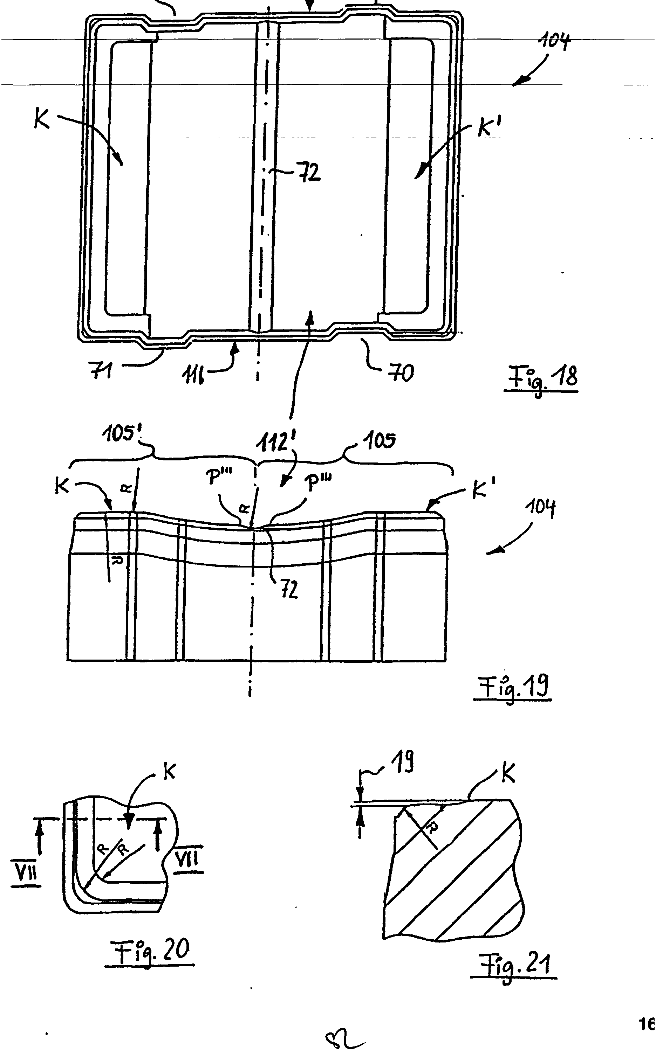

Die Einzeldarstellungen gemäß Fig. 16 und Fig. 17 zeigen den Rinnenformstein 104 mit seiner rechteckigen Umrißkontur und die quer zur Richtung der Flüssigkeitsleitrinne 112' gelegenen Querseitenflächen 116, 116', wobei diese mit einer Nut- und Feder-Profilierung versehen sind. Dabei sind an jeder der Querseitenflächen 116, 116' jeweils ein Nutteil 70 und ein Federteil 71 vorgesehen, die senkrecht und parallel in der jeweiligen Querseitenfläche 116, 116' verlaufen und in diesen gegenüberliegend sind die jeweils gleichgeformten Nut- und Federteile 70, 71 diagonal versetzt zueinander angeordnet (Fig. 18).

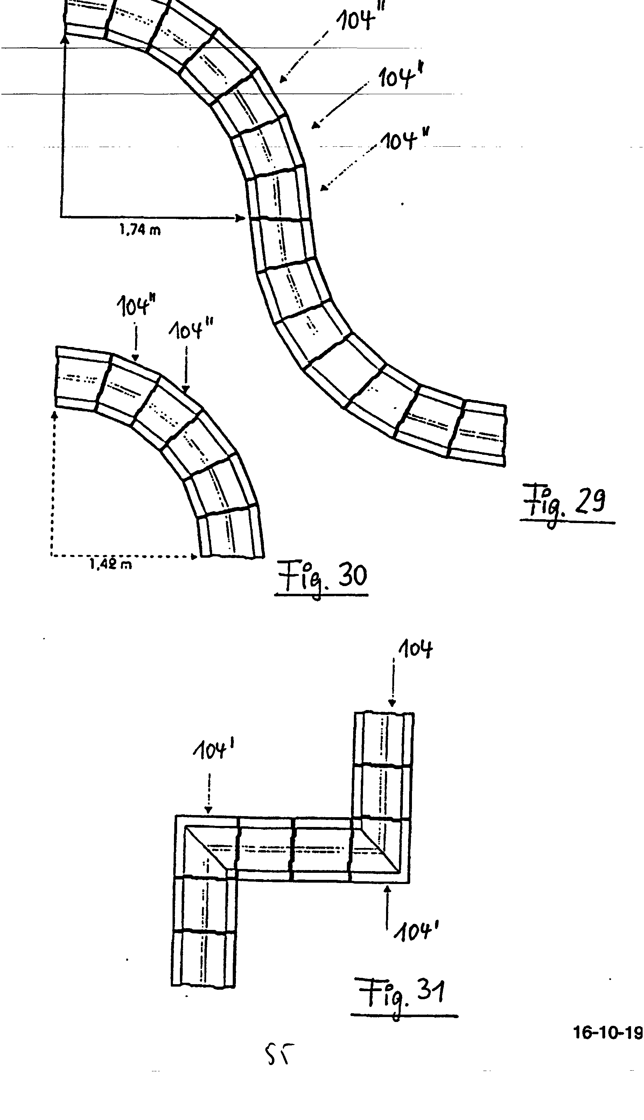

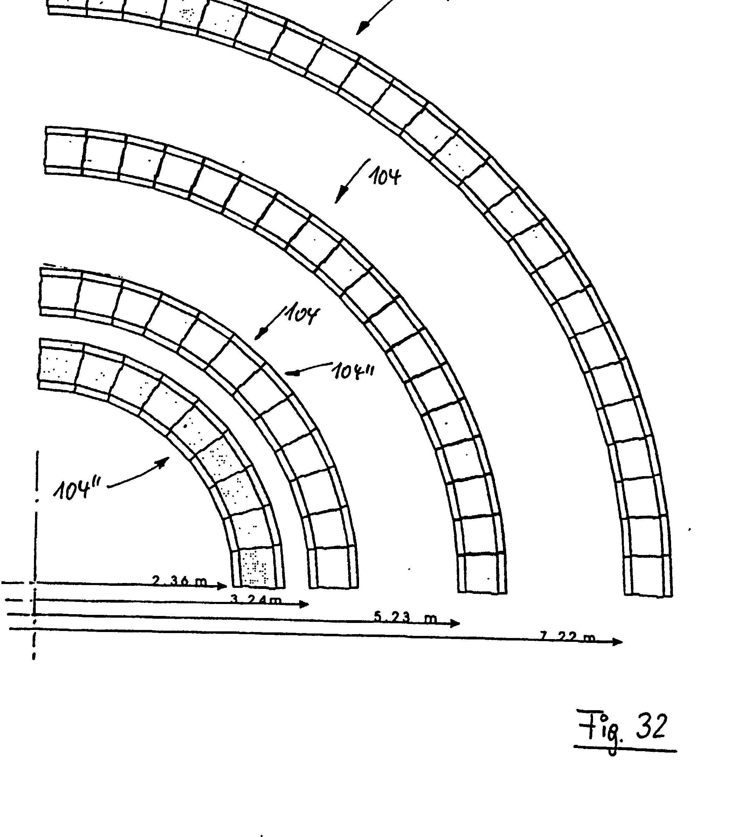

In Fig. 23 bis 28 sind unterschiedliche Ausführungsformen des Rinnenformsteines dargestellt, wobei dieser als Rechteckstein 104 (Fig. 23), Trapezstein 104'' (Fig. 25 bis Fig. 28) oder Eckformstein 104' (Fig. 24) ausgebildet ist. Mit diesen unterschiedlichen Rinnenformsteinen ist insgesamt ein variabel einsetzbarer Bausatz geschaffen, mit dem beispielsweise in Fig. 29 bis Fig. 32 dargestellte Verlegekonturen mit unterschiedlichen Bogenradien (Fig. 29, 30 und 32) bzw. Eckausbildungen (Fig. 31) für Fahrflächen gelegt werden können. Dieser Teil der Fahrfläche bildet mit den Sechsecksteinen 2 beispielsweise die geschlossene Pflasterung 1 (Fig. 15), so daß in dieser die Flüssigkeitsleitrinne 112' verläuft und damit eine Flächenentwässerung erreichbar ist.

Der trapezförmige Rinnenformstein 104'' (Fig. 25 bis Fig. 28) ist in zweckmäßiger Ausführung im Bereich zumin-dest einer seiner Querseitenflächen 116, 116' und/oder seiner Längsseitenflächen (nicht dargestellt) mit einem von 90° abweichenden Winkel T, T' zur jeweils angrenzenden Seitenfläche 117 bzw. 117' hin versehen, wobei dieser Winkel T, T' jeweils ein Maß von 1° bis 10°, vorzugsweise 5°, aufweist. Bei dem Eckformstein 104' gemäß Fig. 24 verläuft die Flüssigkeitsrinne 112' über den Eckbereich zwischen den benachbarten Seitenflächen 116, 117, wobei diese Flächen einen Winkel von vorzugsweise 90° einschließen. Ebenso ist denkbar, nur eine der Seitenflächen mit einer der vorbeschriebenen Neigungen T, T' zu versehen, so daß ein den Verlegebeispielen gemäß Fig. 29 bis 32 ähnliches Anlageschema bei der entsprechenden Pflaster-Verlegung des Bausatzes erreichbar ist.

Die Betonformsteine 104, 104', 104'' weisen jeweilige nach Art einer Rampe geformte Nutzoberflächen 105, 105' (Fig. 22) auf, in der die Flüssigkeitsleitrinne 112' so vorgesehen sein kann, daß diese Steine eine an sich bekannte Rinnenstein-Verlegung, beispielsweise für eine Regenwasserrinne, ermöglichen. Die erfindungsgemäße Flüssigkeitsleitrinne 112' ist in einer verbesserten und belastungsoptimierten Formgebung in jeder ihrer Ausführungsformen im Querschnitt so profiliert, daß die Nutzfläche(n) 105, 105' in hochbelasteten Fahrflächen eine Druckbelastung beim Überrollen der Steine in beliebigen Belastungsrichtungen und an beliebigen Belastungspunkten so aufnehmen, daß die hohen Stabilitätsanforderungen an ein langzeitdichtes Pflasterungssystem erfüllt sind.

In vorteilhafter Ausbildung ist die an sich bekannte Flüssigkeitsleitrinne 112' integraler Bestandteil der Rollprofilierung und weist zumindest eine zusätzliche nutförmige Sammelrinne 72 auf, deren Abmessungen in der Breite und Tiefe so bemessen sind, daß auf der Nutzoberfläche 105, 105' optimale Entwässerungseigenschaften ohne Beeinflussung der Festigkeitswerte des Steins erreicht sind. In Fig. 16 und Fig. 17 sind eine Höhe E im oberen Flächenbereich 110 und eine Höhe E' im Bereich der Sammelrinne 72 veranschaulicht, wobei diese die Festigkeit bestimmenden Maße so in ihrem Verhältnis zueinander definiert sind, daß in Ansehung der Gesamtfestigkeit des Betonformsteines Kerbwirkungen im Bereich der Sammelrinne 72 ausgeschlossen sind, und auch bei maximalen Druckbelastungen an der Nutzfläche 105, 105' ein Bruch des Steins vermieden ist.

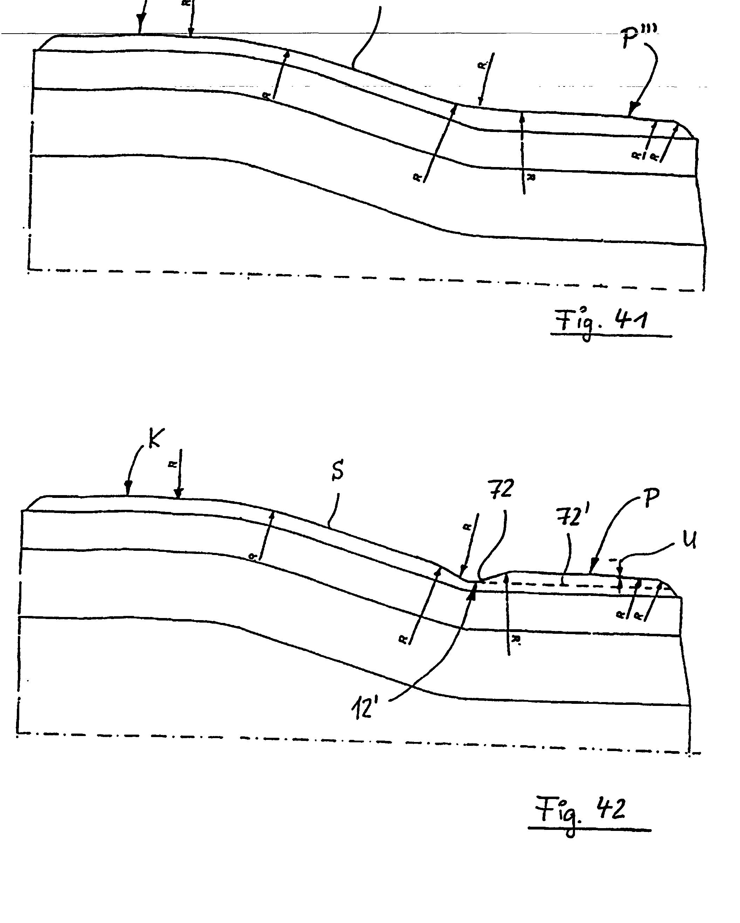

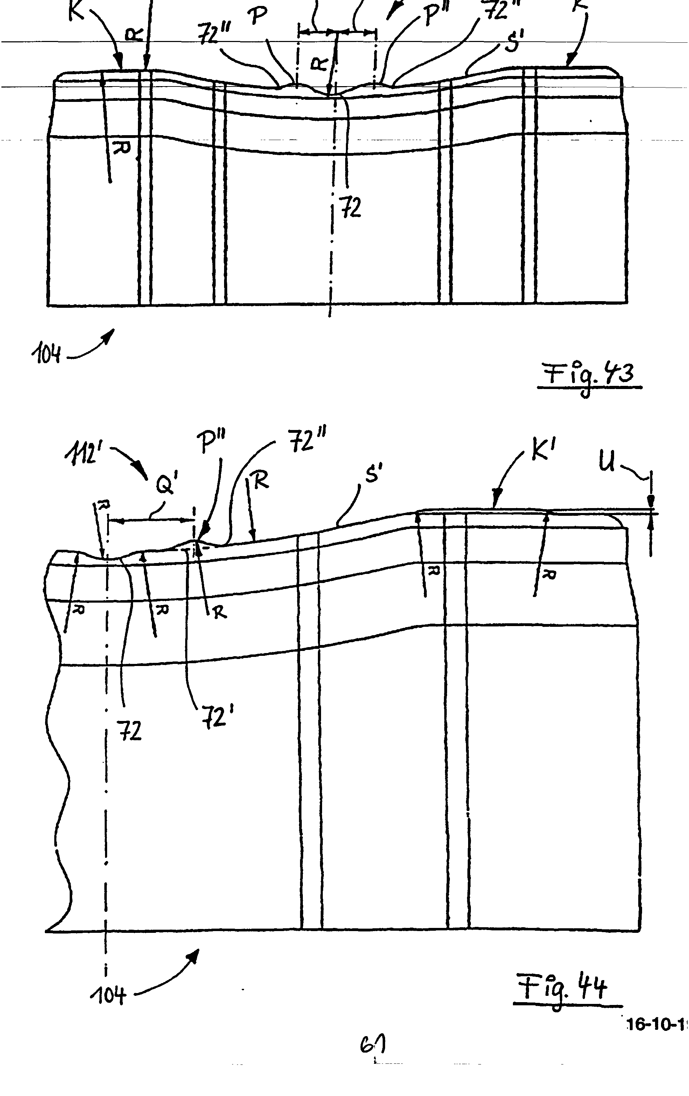

In den dargestellten Ausführungsformen der Steine 104, 104', 104'' verläuft die nutförmige Sammelrinne 72 jeweils in Längsrichtung der Flüssigkeitsleitrinne 112', wobei ebenfalls denkbar ist, quer zur Flüssigkeitsleitrinne 112' nebengeordnete Sammelrinnen 72' (Fig. 24 bis 44 - Strichlinie) vorzusehen. Diese Quer-Sammelrinnen 72' verlaufen dabei als Durchbrechungen des unteren Scheitelflächenbereichs P zur jeweiligen Dichtrinne 34 (Fig. 5) oder zur Haupt-Sammelrinne 72 (Fig. 43, 44) hin. Der Scheitelflächenbereich P kann dabei in unterschiedlichem Abstand Q, Q' zur Mittellängsebene M angeordnet sein, so daß zusätzliche, im wesentlichen der Leitrinne 12' gemäß Fig. 12 entsprechende Sammelrinnen 72'' am Rinnenformstein 104 wirksam sind. In der Ausführung gemäß Fig. 41 ist der Scheitelflächenbereich P''' ohne Bildung einer Sammelrinne zur Formschräge S hin geführt.

Die Perspektivdarstellung gemäß Fig. 15 verdeutlicht in Zusammenschau mit Fig. 1 die Einbaulage der Betonformsteine 104, wobei die Steine umfangsseitig mit ihren Seitenflächen 116, 117 an ein diese und eine Fuge 123 mit dem nebengeordneten Stein 2 fluiddicht abdeckendes Dichtmittel 24 (Fig. 1) angrenzen. Über eine entsprechende Füllhöhe bzw. den jeweiligen Abstand zur Nutzoberfläche 105, 105' hin definiert dieses Dichtmittel 24 ein mit der Oberflächenabsenkung 19 bzw. U, der Flüssigkeitsleitrinne 112' und/oder der Sammelrinne 72, 72' zusammenwirkendes Entwässerungskanal-System zwischen den jeweiligen Betonformsteinen 2, 104, 104', 104'', so daß die Fahrfläche 1 eine permanente Entwässerung erfährt und auch bei einer dichten Folge von Fahrzeugbelastungen bzw. Abrollvorgängen eine ungewollte Mitnahme von Flüssigkeitsresten, Kraftstoffteilen und dgl. Verunreinigungen weitgehend verhindert ist, da auch kleinste Flüssigkeitsströme zu einem Einlaufkasten 7 mit der Durchgangsöffnung 35 hin geleitet werden können (Fig. 15).

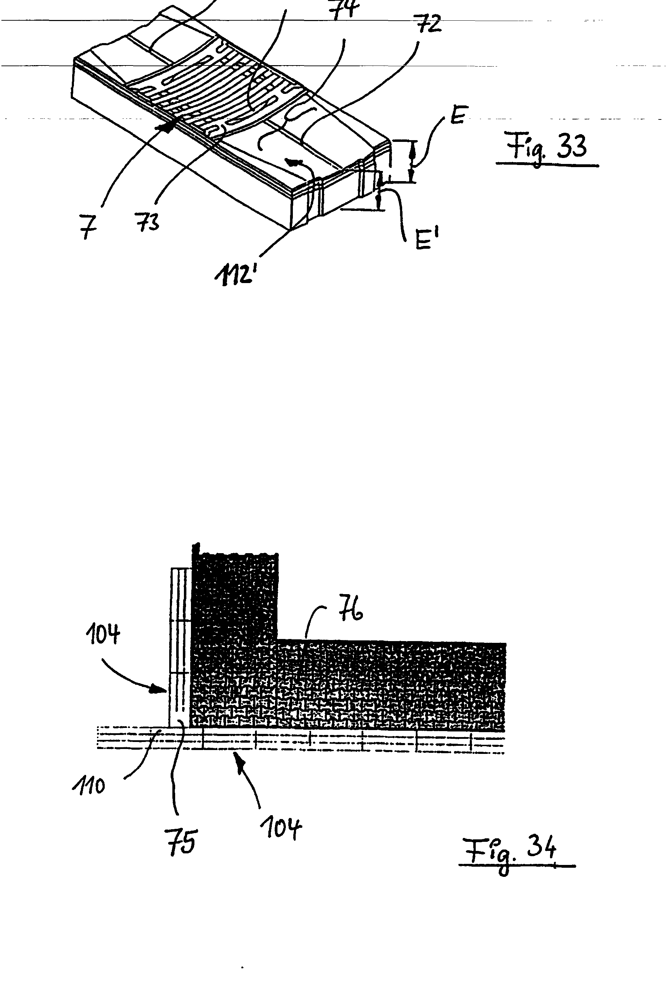

In Fig. 33 ist der Betonformstein 104 mit dem integrierten Einlaufkasten 7 dargestellt, wobei im Bereich der Flüssigkeitsleitrinne 112' eine sich in Längsrichtung zum Einlaufkasten 7 hin erweiternde Muldenform 74 mit der Rollprofilierung deutlich wird. In dieser erweiterten Muldenform 74 ist ebenfalls die Sammelrinne 72 vorgesehen, die zum Einlaufkasten 7 hin mit einer Neigung (nicht dargestellt)verläuft, so daß eine verbesserte Flüssigkeitsleitung erreicht ist. Die erweiterte Ausbildung der Flüssigkeitsleitrinne 112' im Nahbereich zu dem Einlaufkasten 7 bzw. der Durchgangsöffnung 35 hin ermöglicht insbesondere auch bei größeren Flüssigkeitsmengen eine ungehinderte Aufnahme und Einleitung in das Entsorgungssystem unterhalb des Einlaufkastens 7. Der Einlaufkasten 7 ist in zweckmäßiger Ausführung mit einem Rostteil 73 abgedeckt, dessen Oberseite ein an die Nutzfläche 105 des Betonformsteins 104 angepaßte Querschnittskontur mit Rollprofilierung aufweist, so daß der Formstein mit Einlaufkasten an weitgehend beliebiger Einbaupositionen in das Bausatz-System integrierbar ist.

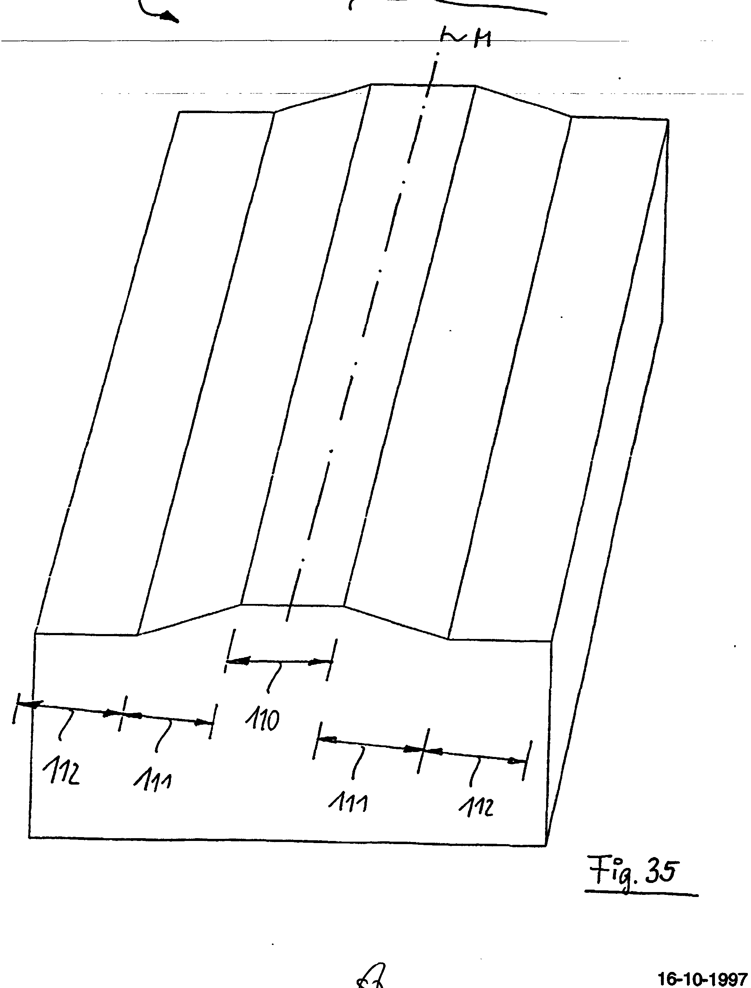

In Fig. 35 ist in einer Perspektivdarstellung ein zur Komplettierung des Bausatzes vorgesehener Betonformstein 104 in Form eines Doppelrampensteins 80 prinzipiell veranschaulicht, wobei dieser mit einem im Bereich seiner Mittellängsebene M verlaufenden, gemeinsamen oberen Flächenbereich 110' ausgebildet ist, an dem sich die entsprechend der vorbeschriebenen Rollprofilierung geformten mittleren und unteren Flächenbereiche 111, 112 anschließen, wobei diese jeweils randseitig in die als Kantenschutz vorgesehenen Oberflächenabsenkungen (nicht dargestellt) übergehen.

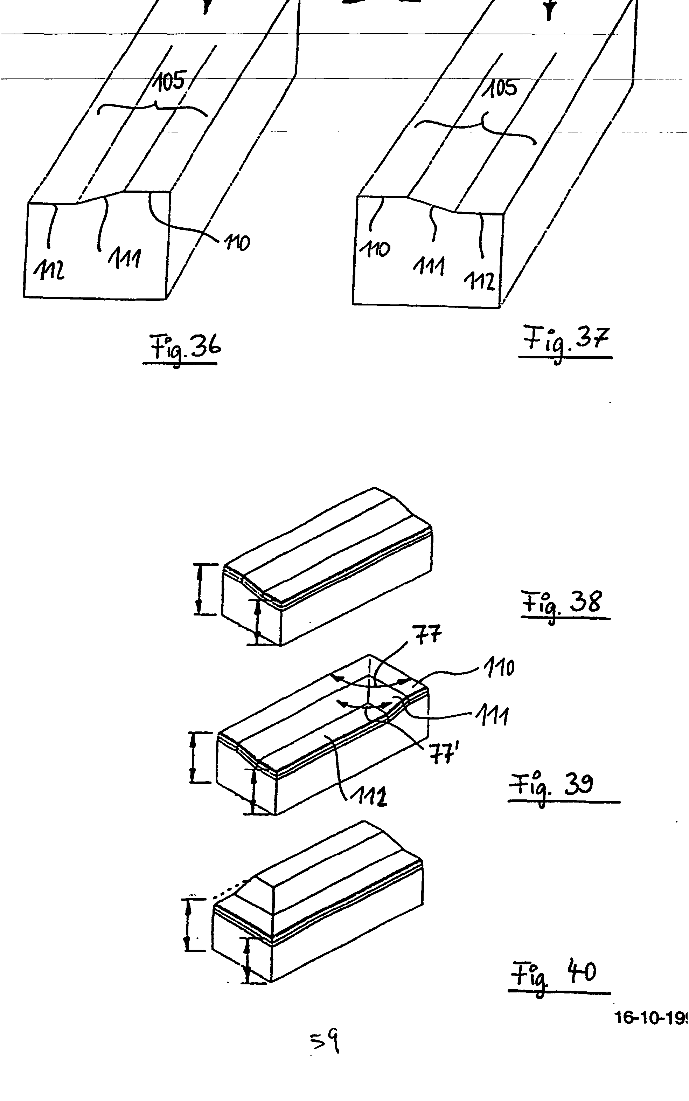

in Fig. 36 und 37 ist der Betonformstein 104 in weiteren zwei Ausführungsformen dargestellt, wobei diese jeweilige in Längsrichtung mit einer Neigung geformte Nutzoberflächen 105 aufweisen, die in Längsrichtung des Steins einenends einen abstufungsfreien Horizontalflächenbereich 75 bilden. In Fig. 34 ist in einer Draufsicht die Einbaulage des Betonformsteins mit der Horizontalfläche 75 veranschaulicht, wobei mittels dieser speziellen Oberflächenform einerseits zu einer angrenzenden Pflasterfläche 76 hin eine stufenlose Eckgestaltung erreicht ist und die Horizontalfläche 75 andererseits gleichebenig mit dem oberen Flächenbereich 110 der angrenzenden Randkanten-Steine 104 verläuft. Ebenso ist denkbar, den Horizontalflächenbereich 75 so zu formen, daß dieser gleichebenig mit dem unteren Flächenbereich 112 eines angrenzenden Steines verläuft (nicht dargestellt).

In Fig. 38 bis 40 sind weitere Betonformsteine 104 prinzipiell veranschaulicht, wobei diese mit im wesentlichen gleichen Längen- und Breiten-Abmessungen sowie dem Höhenunterschied von H1 zu H2 die vorteilhaften Steinformen für den Bausatz verdeutlichen. Der in Fig. 39 dargestellte Formstein 104 ist im Bereich seiner rampenförmigen Nutzoberfläche 105 mit oberen und mit mittleren Flächenbereichen 110, 111 versehen, die einen Eckwinkel 77, 77' von vorzugsweise 90° bilden, so daß ähnlich Fig. 31 eine Verlegung der Steine des Bausatzes mit einer das Rollprofil aufweisenden Eckgestaltung möglich ist.

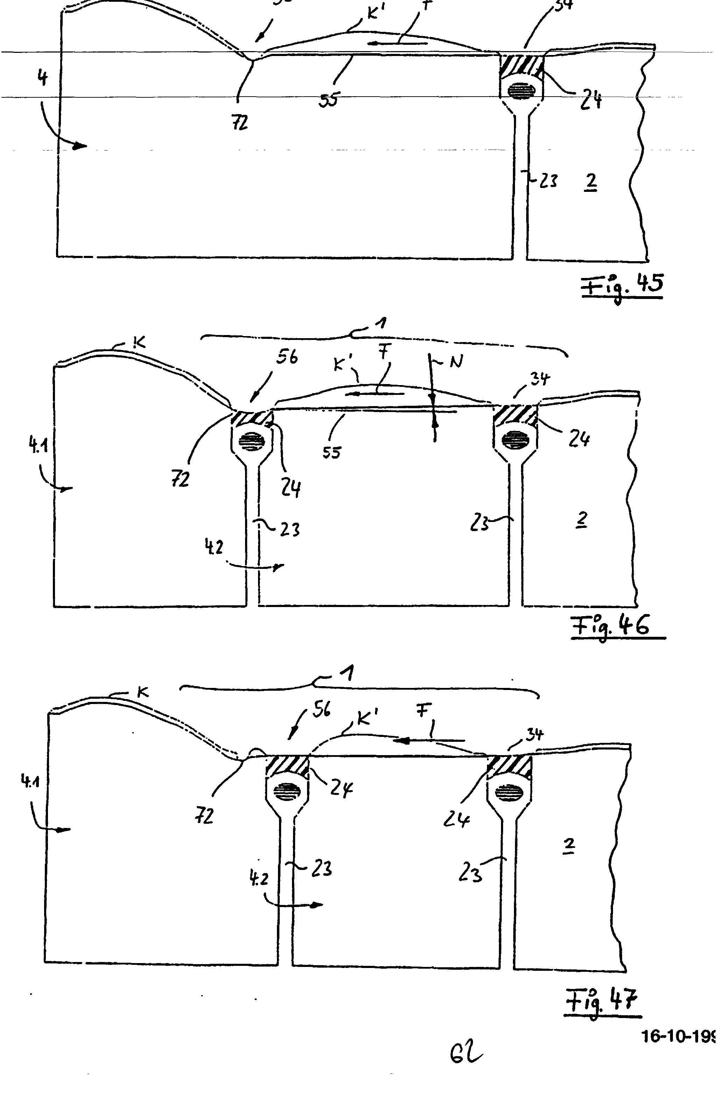

In Fig. 45 bis 47 ist der Rampenstein 4, ausgehend von der einstückigen Ausführungsform gemäß Fig. 45, in einem zweiteiligen Aufbau mit den einzeln verlebaren Teilen 4.1 und 4.2 dargestellt. Diese Teil-Bausteine 4.1 und 4.2 ermöglichen die vorbeschriebene Ausbildung der Oberflächenkontur mit dem Flüssigkeits-Leitsystem, wobei mit einer Fließrichtung F die Wirkung der jeweiligen Steinkonturen (ähnlich Fig. 12 bis 14) zur Flächenentwässerung deutlich wird.

Diese Teil-Bausteine 4.1 und 4.2 sind vorteilhaft auf Unterböden einsetzbar, die instabil sind und noch geringe Setzbewegungen ausführen. Dies ist beispielsweise im Bereich von abgedeckten Deponieflächen oder dgl. möglich, wöbei die mit Dichtmittel 24 verschlossene Trennfugen 23 sowohl einen Schutz gegen Oberflächenwasser als auch gegen aufsteigende Flüssigkeiten bilden und die Elastizität des Dichtmittels 24 auch die Bewegungen des instabilen Untergrunds so ausgleichen kann, daß die Pflasterung 1 gegen Bruch von Rinnen- und/oder Rampensteinen geschützt, mit den Steinen 4, 4.1 und 4.2 eine langzeitstabile Versiegelung erreicht, und die Pflasterung 1 insgesamt belastungsstabil in beliebiger Richtung überfahrbar ist.

## Patentansprüche

1. Betonformstein, insbesondere zur Bildung einer Abstufung in einer Pflasterung (1), Fahrfläche o. dgl., wobei der im wesentlichen quaderförmige Betonformstein (4; 4'; 104, 104', 104'') eine nach Art einer Rampe geformte Nutzoberfläche (5; 105, 105') aufweist, deren Querschnittskontur mit einem zumindest annähernd waagerechten oberen Flächenbereich (10; 110), einem mittleren Flächenbereich (11; 111) mit einer die Rampe bildenden Formschräge (S), einem zumindest annähernd waagerechten unteren Flächenbereich (12; 112) und mit einer Flüssigkeitsleitrinne (12'; 112') versehen ist, **dadurch gekennzeichnet, daß** die oberen und unteren Flächenbereiche (10, 12; 110, 112) des Betonformsteins (4; 4'; 104, 104', 104'') eine zumindest zu den angrenzenden Seitenflächen (16, 17; 116, 116', 117, 117') hin wirksame Oberflächenabsenkung (19, U) gegenüber jeweils innen zum mittleren Flächenbereich (11; 111) hin benachbarten und von einer Erhebung gebildeten Scheitelflächenbereichen (K, K'; P, P'') aufweisen.

2. Betonformstein nach Anspruch 1, **dadurch gekennzeichnet, daß** der Betonformstein (4; 4') in seinem mittleren Flächenbereich (11) mit einer der Formschräge (S) folgenden und im Querschnitt konvexen Bogenkontur (13) ausgebildet ist, die einenends zum oberen Flächenbereich (10) hin einen oberen Konturscheitelpunkt (K) bildet und die anderenends zum unteren Flächenbereich (12) hin über einen Konturwendepunkt (W) in einen konvex aus dem unteren Flächenbereich (12) hervortretenden sowie mit Abstand (22) zur Seitenfläche (16) des Steins angeordneten Profilformbereich (P) übergeht.

3. Betonformstein nach Anspruch 1 oder 2, **dadurch gekennzeichnet, daß** der untere Flächenbereich (12; 112) als die Flüssigkeitsleitrinne (12'; 112') geformt ist.

4. Betonformstein nach einem der Ansprüche 1 bis 3, **dadurch gekennzeichnet, daß** der obere Flächenbereich (10; 110) und der untere Flächenbereich (12; 112) jeweils über einen Radienbogen (R) unmittelbar in die jeweilige angrenzende Seitenfläche (16, 17; 116, 116', 117, 117') des Steines übergehen.

5. Betonformstein nach Anspruch 4, **dadurch gekennzeichnet, daß** der Radienbogen (R) mit einem an diesen anschließenden waagerechten Stegbereich (15) in die Seitenfläche (16, 17; 116, 116', 117, 117') übergeht.

6. Betonformstein nach Anspruch 5, **dadurch gekennzeichnet, daß** der Stegbereich (15') an den Seitenflächen des Betonformsteins (4; 104, 104', 104'') umläuft und sich zumindest bereichsweise mit der Flüssigkeitsleitrinne (12', 112') verschneidet.

7. Betonformstein nach Anspruch 5 oder 6, **dadurch gekennzeichnet**, däß der umlaufende Stegbereich (15; 15') zur Nutzoberfläche (5; 5') hin unterschiedliche Steghöhen darbietet.

8. Betonformstein nach einem der Ansprüche 1 bis 7, **dadurch gekennzeichnet, daß** der obere Flächenbereich (10; 110) des Betonformsteins (4; 4'; 104, 104', 104") in Verlegestellung im Nahbereich zu einer Fahrfläche (18) angeordnet ist und der Konturscheitelpunkt (K; K') der Radienbogenkontur (13) dabei unterhalb, gleichebenig oder oberhalb der Fahrflächenebene (18) verläuft.

9. Betonformstein nach einem der Ansprüche 1 bis 8, **dadurch gekennzeichnet, daß** der untere Flächenbereich (12) des Betonformsteins (4; 4') in Einbaulage zumindest bereichsweise (22) gleichebenig mit einer zugeordneten Pflasterfläche (1) bzw. einem Übergangsbereich (25) verläuft und dieser in eine Formschräge (26) übergeht.

10. Betonformstein nach einem der Ansprüche 1 bis 9, **dadurch gekennzeichnet, daß** in diesem eine einen Einlaufkasten (7) aufnehmende Durchgangsöffnung (35) eingeformt ist.

11. Betonformstein nach Anspruch 10, **dadurch gekennzeichnet, daß** die Durchgangsöffnung (35) im oberen Bereich des Einlaufkastens (7) mit einem Rostteil (73) abgedeckt ist, dessen Oberseite eine an die Nutzfläche (5; 105, 105') des Betonformsteins angepaßte Querschnittskontur aufweist.

12. Betonformstein nach einem der Ansprüche 1 bis 11, **dadurch gekennzeichnet, daß** dieser als Doppelrampenstein (80) mit einem im Bereich seiner Mittellängsebene (M) verlaufenden gemeinsamen oberen Flächenbereich (110) ausgebildet ist.

13. Betonformstein nach einem der Ansprüche 1 bis 12, **dadurch gekennzeichnet, daß** dessen in der Querschnittskontur zumindest eine Rampe aufweisende Nutzoberfläche (105, 105') in Längsrichtung des Betonformsteins (4; 104, 104', 104''; 80) zumindest bereichsweise mit einer Neigung geformt ist, derart, daß die Nutzoberfläche (5; 105; 105') zumindest einenends einen Horizontalflächenbereich (75) bildet.

14. Betonformstein nach Anspruch 13, **dadurch gekennzeichnet, daß** der Horizontalflächenbereich (75) gleichebenig mit dem unteren Flächenbereich (112) ist.

15. Betonformstein nach einem der Ansprüche 1 bis 14, **dadurch gekennzeichnet, daß** die rampenförmige Nutzoberfläche (5; 105; 105') ausgehend von dem gemeinsamen unteren Flächenbereich (12; 112) jeweilige obere und mittlere Flächenbereiche (110, 111) aufweist, die einen inneren Eckwinkel (77) von vorzugsweise 90° bilden.

16. Betonformstein, insbesondere nach einem der Ansprüche 1 bis 15, für eine Pflasterung (1) mit Verbundverlegung, wobei der im wesentlichen quaderförmige Betonformstein (4; 104; 104'; 104'') eine nach Art einer Rampe geformte Nutzoberfläche (5; 105; 105') aufweist, deren Querschnittskontur mit einem zumindest annähernd waagerechten oberen Flächenbereich (10; 110), einem mittleren Flächenbereich (11; 111) mit einer die Rampe bildenden Formschräge (S), einem zumindest annähernd waagerechten unteren Flächenbereich (12; 112) und mit einer Flüssigkeitsleitrinne (12'; 112') versehen ist, **dadurch gekennzeichnet, daß** der Betonformstein unter Bildung eines doppelrampenförmigen Rinnenformsteins (104) eine zu einer vertikalen Mittelebene (M) symmetrische Ausbildung und eine zentrale Flüssigkeitsleitrinne (112') aufweist, die sich entlang der vertikalen Mittelebene (M) zwischen benachbarten unteren Oberflächenabsenkungen (112) der beiden benachbarten rampenförmigen Nutzoberflächen (105; 105') erstreckt.

17. Betonformstein nach Anspruch 16, **dadurch gekennzeichnet, daß** der Rinnenformstein (104) eine rechteckige Umrißkontur aufweist und die quer zur Richtung der Flüssigkeitsleitrinne (112') gelegenen Querseitenflächen (116, 116') mit einer Nut- und Feder-Profilierung versehen sind.

18. Betonformstein nach Anspruch 17, **dadurch gekennzeichnet, daß** die Nut- und Feder-Profilierung in der jeweiligen Querseitenfläche (116, 116') mit einem Nutteil (70) und einem Federteil (71) versehen ist, wobei diese beiden Teile senkrecht und parallel verlaufen.

19. Betonformstein nach Anspruch 17 oder 18, **dadurch gekennzeichnet, daß** an gegenüberliegenden Querseitenflächen (116, 116') die jeweils gleichgeformten Nut- und Federteile (70, 71) diagonal versetzt angeordnet sind.

20. Betonformstein nach einem der Ansprüche 16 bis 19, **dadurch gekennzeichnet, daß** der Rinnenformstein als Rechteck-, Trapez- oder Eckformstein (104, 104'', 104') ausgebildet ist und Teil eines Bausatzes bildet.

21. Betonformstein nach Anspruch 20, **dadurch gekennzeichnet, daß** der Trapezformstein (104'') im Bereich zumindest einer seiner Querseitenflächen (116, 116') und/oder Längsseitenflächen (117, 117') einen von 90° abweichenden Winkel (T, T') zur jeweils angrenzenden Seitenfläche bildet.

22. Betonformstein nach Anspruch 20 oder 21, **dadurch gekennzeichnet, daß** der Winkel (T, T') 1° bis 10°, vorzugsweise 5°, beträgt.

23. Betonformstein nach einem der Ansprüche 16 bis 22, **dadurch gekennzeichnet, daß** bei dem Eckformstein (104') die Flüssigkeitsleitrinne (112') zwischen benachbarten Seitenflächen (116, 117) verläuft und diese Flächen einen Winkel von vorzugsweise 90° einschließen.

24. Betonformstein nach einem der Ansprüche 16 bis 23, **dadurch gekennzeichnet, daß** der Betonformstein (104) im Bereich der zentralen Flüssigkeitsleitrinne (112') eine asymmetrische Ausbildung aufweist.

25. Betonformstein nach einem der Ansprüche 1 bis 24, **dadurch gekennzeichnet, daß** die Nutzoberfläche (5) im Bereich der Flüssigkeitsleitrinne (12'; 112') mit zumindest einer zusätzlichen nutförmigen Sammelrinne (72; 72'; 72'') versehen ist.

26. Betonformstein nach Anspruch 25, **dadurch gekennzeichnet, daß** die zusätzliche Sammelrinne (72; 72'; 72") längs oder quer zur Flüssigkeitsleitrinne (112') verläuft.

27. Pflasterung mit Betonformsteinen, nach einem der Ansprüche 1 bis 26, **dadurch gekennzeichnet, daß** die Betonformsteine (4; 104; 104', 104'') in Einbaulage umfangseitig mit zumindest einer ihrer Seitenflächen (116, 116', 117, 117') der Seitenfläche (116, 117) eines nebengeordneten Steins unter Bildung einer Fuge (23; 123) gegenüberliegen und die Fuge (23; 123) durch ein Dichtmittel (24) fluiddicht abgedichtet ist, dessen Füllhöhe ein mit der Oberflächenabsenkung (U, 19), der Flüssigkeitsleitrinne (12'; 112') und/oder der Sammelrinne (72) zusammenwirkendes Entwässerungskanal-System zwischen den verlegten Betonformsteinen (2; 4; 104) bildet.

## Claims

1. Concrete block, in particular for forming a step in a pavement (1), -driving surface or the like, whereby the essentially squared concrete block (4; 4'; 104, 104', 104") has a useful surface shaped like a ramp (5; 105, 105') and having a cross-sectional profile with an at least approximately horizontal top surface (10; 110), a central surface (11; 111) slanted to form the ramp (S), at least approximately horizontal bottom surface (12; 112) and a gutter (12', 112'), **characterised in that** the top and bottom surfaces (10, 12; 110, 112) of the concrete block (4; 4'; 104, 104', 104") have a depression (19, U) at least towards the adjacent side surfaces (16; 17; 116, 116', 117, 117') with respect to apex surfaces (K, K'; P, P") formed by a bump and which extend between the depression and the central surface (11; 111).

2. Concrete block in accordance with claim 1, **characterised in that** the concrete block (4; 4') is designed in its central surface (11) with a curved contour (13) which follows the ramp (S) and is convex in cross-section, which at one end forms an upper contour apex (K) towards the upper surface (10) and at the other end passes to the lower surface (12) via a contour turning point (W) into a convex profile shaped area (P), projecting out of the lower surface (12) and arranged at a distance (22) from the side (16) of the block.

3. Concrete block in accordance with claim 1 or 2, **characterised in that** the lower surface (12; 112) is formed as the gutter (12'; 112').

4. Concrete block in accordance with one of Claims 1 to 3, **characterised in that** the upper surface (10; 110) and the lower surface (12; 112) pass in each case via a radial bend (R) directly into the adjacent side (16, 17; 116, 116', 117, 117') ofthe block.

5. Concrete block in accordance with claim 4, **characterised in that** the radial bend (R) passes into the side (16, 17; 116, 116', 117, 117') with a horizontal web (15) connected to said bend.

6. Concrete block in accordance with claim 5, **characterised in that** the web (15') circumscribes the sides of the concrete block (4; 104, 104', 104") and intersects at least in parts with the gutter (12', 112').

7. Concrete block in accordance with claim 5 or 6, **characterised in that** the circumferential web (15; 15') presents different web heights towards the useful surface (5; 5').

8. Concrete block in accordance with one of claims 1 to 7, **characterised in that** the upper surface (10; 110) of the concrete block (4; 4'; 104, 104', 104") is arranged in a laid position in the proximity of a driving surface (18), and the contour apex (K; K') of the radial bend contour (13) in this situation runs beneath, on an equal plane with, or above the driving surface (18).

9. Concrete block in accordance with one of claims 1 to 8, **characterised in that** the lower surface (12) of the concrete block (4; 4') in the installed position runs at least in parts (22) on an equal plane with an arranged pavement (1) or with a transition area (25), and that this passes into an incline (26).

10. Concrete block in accordance with one of claims 1 to 9, **characterised in that** the a passage aperture (35) is formed in this which accommodates an inlet box (7).

11. Concrete block in accordance with claim 10, **characterised in that** the passage aperture (35) is covered in the upper part of the inlet box (7) with a grid section (73), of which the top has a cross-section contour adapted to the useful surface (5; 105, 105') of the concrete block.

12. Concrete block in accordance with one of claims 1 to 11, **characterised in that** it is designed as a double ramp block (80) with a common upper surface (110) running in the area of its middle surface (M).

13. Concrete block in accordance with one of claims 1 to 12, **characterised in that** its useful surface (105, 105'), which has at least one ramp in the cross-section contour, is formed in the longitudinal direction of the concrete block (4; 104, 104', 104"; 80) at least in part with an inclination, in such a way that the useful surface (5; 105; 105') forms a horizontal surface area (75) at at least one end.

14. Concrete block in accordance with claim 13, **characterised in that** the horizontal surface area (75) is on an equal plane with the lower surface (112).

15. Concrete block in accordance with one of claims 1 to 14, **characterised in that** the ramp-shaped useful surface (5; 105; 105'), going out from the common lower surface (12; 112), has in each case upper and central surfaces (110, 111), which form an inner corner angle (77) for preference of 90E.

16. Concrete block, in particular in accordance with one of claims 1 to 15, for a pavement (1) with composite laying, whereby the concrete block (4; 104, 104', 104"), essentially square shaped, has a useful surface (5; 105; 105') formed in the nature of a ramp, the cross-section contour of said useful surface being provided with an at least approximately horizontal upper surface (10; 110), a central surface (11; 111) with an incline (S) forming the ramp, an at least approximately horizontal lower surface (12; 112), and a gutter (12'; 112'), characterised in thatthe concrete block has a form symmetrical to a vertical central plane (M), forming a double-ramp gutter block (104) and a central gutter (112'), which extends between adjacent lower depressions (112) of the two adjacent ramp-shaped useful surfaces (105; 105').

17. Concrete block in accordance with claim 16, **characterised in that** the gutter block (104) has a rectangular circumferential contour and the transverse side surfaces (116, 116') laid transverse to the direction of the gutter (112') are provided with tongue-and-groove profiling.

18. Concrete block in accordance with claim 17, **characterised in that** the tongue-and-groove profiling in the transverse side surface (116, 116') in each case is provided with a groove part (70) and a tongue part (71), whereby these two parts run perpendicular and parallel.

19. Concrete block in accordance with claim 17 or 18, **characterised in that**, at opposite transverse side surfaces (116, 116'), the tongue-and-groove parts (70, 71), of the same shape in each case, are arranged diagonally offset.

20. Concrete block in accordance with one of claims 16 to 19, **characterised in that** the gutter is designed as a rectangular, trapezoidal, or corner block (104, 104", 104') and forms part of a construction set.

21. Concrete block in accordance with claim 20, **characterised in that** the trapezoidal block (104"), in the area of at least one of its transverse side surfaces (116, 116') and/or longitudinal side surfaces (117, 117'), forms an angle (T, T') deviating from 90E with the side areas adjacent to it in each case.

22. Concrete block in accordance with claim 20 or 21, **characterised in that** the angle (T, T') amounts to up to 10E, for preference 5E.

23. Concrete block in accordance with one of claims 16 to 22, **characterised in that**, with the comer block (104'), the gutter (112') runs between adjacent side surfaces (116, 117) and these surfaces enclose an angle of, for preference, 90E.

24. Concrete block in accordance with one of claims 16 to 23, **characterised in that** the concrete block (104) has an asymmetrical design in the area of the central gutter (112').

25. Concrete block in accordance with one of claims 1 to 24, **characterised in that** the useful surface (5) is provided in the area of the gutter (12', 112') with at least one additional groove-shaped collecting channel (72; 72'; 72").

26. Concrete block in accordance with claim 25, **characterised in that** the additional collecting channel (72; 72'; 72") runs longitudinally or transversely to the gutter (112').

27. Pavement with concrete blocks in accordance with one of claims 1 to 26, **characterised in that** the concrete blocks (4; 104; 104', 104") in the installed position are located on the circumference side with at least one of their side surfaces (116, 116', 117, 117') opposite the side area (116, 117) of a block arranged next to them, with the formation of a joint (23, 123), and the joint (23; 123) is sealed fluid-tight by means of a sealing agent (24), the filling height of which forms a water removal system between the laid concrete blocks (2; 4; 104), interacting with the depression (U, 19), the gutter (12'; 112'), and/or the collecting channel (72).

## Revendications

1. Pavé en béton moulé, en particulier pour former un gradin dans un pavage (1), la surface d'une chaussée ou similaires, le pavé en béton moulé (4; 4'; 104, 104', 104'') essentiellement en forme de parallélépipède présentant une surface utile (5; 105, 105') en forme de rampe dont la section transversale possède un contour doté d'une zone supérieure de surface (10; 110) au moins approximativement horizontale, d'une zone centrale de surface (11; 111) dotée d'une pente (S) qui forme la rampe, d'une zone inférieure de surface (12; 112) au moins approximativement horizontale et d'une rigole (12'; 112') de guidage de liquide, **caractérisé en ce que** la zone supérieure et la zone inférieure de surface (10, 12; 110, 112) du pavé en béton moulé (4; 4'; 104, 104', 104'') présentent un abaissement de surface (19, U), actif au moins en direction des surfaces latérales adjacentes (16, 17; 116, 116', 117, 117'), par rapport à chacune des zones de surface de sommet (K, K'; P, P'') voisines de la zone centrale de surface (11; 111) et formées par un rehaussement.

2. Pavé en béton moulé selon la revendication 1, **caractérisé en ce que** dans sa zone centrale de surface (11), le pavé en béton moulé (4; 4') est configuré avec un contour courbe (13) qui suit la pente (S) et de section transversale convexe, qui forme à une extrémité un sommet supérieur (K) de contour en direction de la zone supérieure de surface (10) et qui, à l'autre extrémité, se prolonge par l'intermédiaire d'un point d'inflexion (W) du contour en direction de la zone inférieure de surface (12) en une zone profilée (P) qui déborde de manière convexe de la zone inférieure de surface (12) et qui est disposée à une distance (22) de la surface latérale (16) du pavé.

3. Pavé en béton moulé selon la revendication 1 ou 2, **caractérisé en ce que** la zone inférieure de surface (12; 112) est configurée comme la rigole (12'; 112') de guidage de liquide.

4. Pavé en béton moulé selon l'une quelconque des revendications 1 à 3, **caractérisé en ce que** la zone supérieure de surface (10; 110) et la zone inférieure de surface (12; 112) se prolongent directement, chacune par un arc de rayon (R), en les surfaces latérales (16, 17; 116, 116', 117, 117') adjacentes respectives du pavé.

5. Pavé en béton moulé selon la revendication 4, **caractérisé en ce que** l'arc de rayon (R) se prolonge en les surfaces latérales (16, 17; 116, 116', 117, 117') par une zone intermédiaire horizontale (15) qui s'y raccorde.

6. Pavé en béton moulé selon la revendication 5, **caractérisé en ce que** la zone intermédiaire (15') entoure le pavé en béton moulé (4; 104, 104', 104'') sur ses surfaces latérales et, au moins dans certaines zones, coupe la rigole (12', 112') de guidage de liquide.

7. Pavé en béton moulé selon la revendication 5 ou 6, **caractérisé en ce que** la zone intermédiaire périphérique (15, 15') présente différentes hauteurs par rapport à la surface utile (5; 5').

8. Pavé en béton moulé selon l'une quelconque des revendications 1 à 7, **caractérisé en ce que** la zone supérieure de surface (10; 110) du pavé en béton moulé (4; 4'; 104, 104', 104'') placé en position est disposée à proximité d'une surface de chaussée (18) et **en ce que** le point de sommet (K; K') du contour en arc de cercle (13) s'étend en dessous, dans le même plan ou au-dessus du plan (18) de la surface de chaussée.

9. Pavé en béton moulé selon l'une quelconque des revendications 1 à 8, **caractérisé en ce qu'**en position de pose, la zone inférieure de surface (12) du pavé en béton moulé (4; 4') s'étend au moins dans certaines zones (22) dans le même plan qu'une surface pavée (1) qui lui est associée ou selon le cas qu'une zone de transition (25) et prolonge cette dernière par une pente (26).

10. Pavé en béton moulé selon l'une quelconque des revendications 1 à 9, **caractérisé en ce qu'**une ouverture de passage qui reçoit un caisson d'écoulement (7) y est formée.

11. Pavé en béton moulé selon la revendication 10, **caractérisé en ce que** dans la partie supérieure du caisson d'écoulement (7), l'ouverture de passage (35) est recouverte par une pièce en grille (73) dont le côté supérieur présente une section transversale dont le contour est adapté à la surface utile (5; 105, 105') du pavé en béton moulé.

12. Pavé en béton moulé selon l'une quelconques des revendications 1 à 11, **caractérisé en ce qu'**il est configuré comme pavé (80) à double rampe avec une zone supérieure de surface (110) commune qui s'étend dans la région de son plan longitudinal central (M).

13. Pavé en béton moulé selon l'une quelconque des revendications 1 à 12, **caractérisé en ce que** dans le sens de la longueur du pavé en béton moulé (4; 104, 104', 104''), sa surface utile (105, 105'), qui présente au moins une rampe dans la section transversale de son contour, est configurée au moins dans certaines zones avec une pente, de telle sorte que la surface utile (5; 105, 105') forme au moins à une extrémité une zone horizontale de surface (75).

14. Pavé en béton moulé selon la revendication 10, **caractérisé en ce que** la zone horizontale de surface (75) est située dans le même plan que la zone inférieure de surface (112).

15. Pavé en béton moulé selon l'une quelconque des revendications 1 à 14, **caractérisé en ce que** partant de la zone inférieure de surface (12; 112) commune, la surface utile (5; 105, 105') en forme de rampe présente une zone supérieure et une zone centrale de surface (110, 111) respectives qui forment un angle de coin intérieur (77) de préférence de 90°.

16. Pavé en béton moulé, en particulier selon l'une quelconque des revendications 1 à 15, pour un pavage (1) appareillé de manière composite, le pavé en béton moulé (4; 104, 104', 104'') essentiellement en forme de parallélépipède présentant une surface utile (5; 105, 105') en forme de rampe dont la section transversale possède un contour doté d'une zone supérieure de surface (10; 110) au moins approximativement horizontale, d'une zone centrale de surface (11; 111) dotée d'une pente (S) qui forme la rampe, d'une zone inférieure de surface (12; 112) au moins approximativement horizontale et d'une rigole (12'; 112') de guidage de liquide, **caractérisé en ce que** le pavé en béton moulé, qui forme un pavé moulé (104) à rigole en forme de double rampe, présente une rigole (112') de guidage de liquide et une configuration symétrique par rapport à un plan vertical central (M), qui s'étend le long du plan vertical central (M) entre des abaissements inférieurs voisins de surface (112) des deux surfaces utiles (105; 105') voisines en forme de rampe.

17. Pavé en béton moulé selon la revendication 16, **caractérisé en ce que** le pavé moulé (104) à rigole présente un périmètre à contour rectangulaire, les surfaces latérales transversales (116, 116') situées transversalement par rapport à la direction de la rigole (112') de guidage de liquide étant dotées d'un profil à rainure et languette.

18. Pavé en béton moulé selon la revendication 17, **caractérisé en ce que** le profil à rainure et languette de chacune des surfaces latérales transversales (116, 116') est doté d'une partie en rainure (70) et d'une partie en languette (71), ces deux parties s'étendant à la verticale et en parallèle.

19. Pavé en béton moulé selon la revendication 17 ou 18, **caractérisé en ce que** sur les surfaces latérales transversales (116, 116') opposées, les parties à chaque fois identiques (70, 71) en rainure et languette sont disposées avec un décalage diagonal.

20. Pavé en béton moulé selon l'une quelconque des revendications 16 à 19, **caractérisé en ce que** le pavé moulé à rigole est configuré comme pavé moulé rectangulaire, trapézoïdal ou en coin (104, 104'', 104') et fait partie d'un ensemble de pavage.

21. Pavé en béton moulé selon la revendication 20, **caractérisé en ce que** dans la région d'au moins l'une de ses surfaces latérales transversales (116, 116') et/ou de ses surfaces latérales longitudinales (117, 117'), le pavé moulé trapézoïdal (104'') forme avec la surface latérale adjacente respective un angle (T, T') différent de 90°.

22. Pavé en béton moulé selon la revendication 20 ou 21, **caractérisé en ce que** l'angle (T, T') vaut de 1° à 10°, et de préférence 5°.

23. Pavé en béton moulé selon l'une quelconque des revendications 16 à 22, **caractérisé en ce que** dans le pavé moulé en coin (104'), la rigole (112') de guidage de liquide s'étend entre des surfaces latérales (116, 117) voisines, ces surfaces formant un angle de préférence de 90°.

24. Pavé en béton moulé selon l'une quelconque des revendications 16 à 23, **caractérisé en ce que** dans la zone centrale de la rigole (112') de guidage de liquide, le pavé en béton moulé (104) présente une configuration asymétrique.

25. Pavé en béton moulé selon l'une quelconque des revendications 1 à 24, **caractérisé en ce que** dans la zone de la rigole (12'; 112') de guidage de liquide, la surface utile (5) est dotée d'au moins une rigole supplémentaire de collecte (72; 72'; 72'') en forme de rainure.

26. Pavé en béton moulé selon la revendication 25, **caractérisé en ce que** la rigole supplémentaire de collecte (72; 72'; 72'') s'étend longitudinalement ou transversalement par rapport à la rigole (112') de guidage de liquide.

27. Dallage en pavés de béton moulé selon l'une quelconque des revendications 1 à 26, **caractérisé en ce que** dans la position de pose, les pavés en béton moulé (4; 104, 104', 104'') sont posés avec à leur périphérie au moins l'une des surfaces latérales (116, 117) d'un pavé voisin contre leurs surfaces latérales (116, 116', 117, 117') avec formation d'un joint (23; 123), le joint (23; 123) étant rendu étanche aux fluides par un agent d'étanchéité qui le remplit sur une hauteur qui permet de former entre les pavés en béton moulé (2; 4; 104) posés un système de canal d'évacuation d'eau qui coopère avec l'abaissement de surface (U, 19), la rigole (12'; 112') de guidage de liquide et/ou la rigole de collecte (72).
